Europäisches Patentamt

European Patent Office

Office européen des brevets

(19)

(11) **EP 1 233 356 A1**

(12) **EUROPEAN PATENT APPLICATION**

(43) Date of publication:
**21.08.2002 Bulletin 2002/34**

(51) Int Cl.$^7$: **G06F 17/60**

(21) Application number: **01610010.9**

(22) Date of filing: **12.02.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Dahl-Sorensen & Partners A/S**
**2930 Klampenborg (DK)**

(72) Inventors:
• **Dahl-Sorensen, Niels**
**2930 Klampenborg (DK)**
• **Bruun, Jesper**
**2400 Copenhagen NV (DK)**

(74) Representative: **Boesen, Johnny Peder et al**
**Hofman-Bang Zacco A/S**
**Hans Bekkevolds Allé 7**
**2900 Hellerup (DK)**

(54) **Method of estimating the fair market value of small and medium-sized unlisted corporations**

(57)    A method for estimating a value of a corporation or a business activity, based on a cash flow model, under which an NPV of future earnings generated by the corporation or the business activity over a term of years is estimated on the basis of a given budget for the corporation or the business activity, a given discount rate and a given budget period. The budget period is estimated by means of a model based on selected factors relating to the corporation. Furthermore, a method for the estimation of a budget period for purposes of an estimation of the value of a corporation or a business activity, based on a cash flow model, in which the budget period is estimated using a model based on selected factors comprising the corporation's products, market position, productive equipment and human resources. A number of points are allocated to these factors on the basis of a number of data, and the points allocated to the factors are included in a mutual weighted ratio in the model applied to estimate the budget period. Also, a computer program for purposes of the mentioned methods, which computer program is designed to make the calculations stated.

Fig. 3

EP 1 233 356 A1

Printed by Jouve, 75001 PARIS (FR)

**Description**

**II. DEFINITIONS:**

The following definitions are used for purposes of the DSPmodel®

| | |
|---|---|
| **"Additional expenses"** | Extra expenses that may occur on the merger of the purchasing and the acquired corporations or business activity |
| **"Budget period":** | The period (in years) in which the future cash flow is discounted to NPV |
| **"Business activity":** | See "substance" |
| **"Corporation":** | A limited liability company/corporation |
| **"Discount rate":** | The rate of interest used to discount the future cash flow |
| **"Discounted Share Pricing":** | Valuation of stocks/shares |
| **"Discounted Substance Pricing":** | Valuation of assets/substance |
| **"Duration":** | The period during which a corporation or business activity is expected to operate on the basis of its existing commercial basis |
| **"FMV":** | Fair Market Value (of a corporation or a business activity) |
| **"Invention":** | DSPmodel® |
| **"NPV":** | Net Present Value |
| **"Saved expenses":** | Expenses that may be saved on the merger of the purchasing and the acquired corporations or business activities |
| **"Stock":** | (US) |
| **"Shares":** | (UK) |
| **"Substance":** | The assets of a business activity |
| **"Synergies":** | The potential benefits reaped from joint operation (resulting from the merger of two or more businesses) |
| **"Valuation":** | Estimation of |

**(i)** the value of the equity and thereby the stocks of a corporation
**(ii)** the value of the substance/assets of a business activity

| | |
|---|---|
| **"WACC":** | The weighted average cost of capital |

**III. TECHNICAL FIELD:**

DSPmodel® is designed for an estimation of the FMV of small and medium-sized unlisted corporations, based on a given budget, potential synergies, a discount rate (yield) and a duration

**IV. STATE OF THE ART:**

**A. DISCOUNTED SHARE PRICING MODEL**

Corporations are generally valued on the basis of a cash flow model. The underlying principle in a cash flow model is an estimation of the NPV of the future earnings which the relevant corporation can generate over a term of years In mathematical terms, the NPV is estimated by discounting the future annual budgeted earnings by a given discount rate in a given budget period, thus estimating the NPV of earnings in the budget period. After the end of the budget period, the corporation is presumed to have arrived at a "steady state" that is assumed to last in perpetuity By using a simple annuity formula and based on the expected earnings in the first year after the end of the budget period, a terminal value equaling the value of an indefinite cash flow at a given interest rate (the discount rate) This terminal value is discounted over the same period as the budget period, thus estimating the NPV of the terminal value The sum of the NPV of earnings in the budget period and the terminal value, less the market value of the corporation's debt/liabilities and any non-operating securities, is the market value of the corporation's equity

No theoretical arguments exist as to how long the budget period to be applied in a given estimate should be However, budget periods of 5-15 years are typically applied. Quite a few theorists believe that the duration of the budget period should follow the product life cycle of the corporation concerned This means that businesses with high-tech products should have a short budget period, as the life cycle of these products is not very long due to the speed of the technological development However, the duration of the budget period has no real impact on the value of the corporation, as the value is very much determined by the terminal value as well The duration of the budget period influences how much of the total value should be determined by the budget period. Analyses have shown that if a budget period of 5 years is applied, the budget period will account for "only" 25% of the value, whereas the terminal value accounts for the remaining 75%. The longer the budget period is, the higher share of the total value will it represent

The discount rate applied in a conventional cash flow model is an interest rate reflecting the corporation's WACC

The conventional cash flow model is a model that is highly recognized and applied by people in the finance sector all over the world for business valuation purposes It should be noted in this respect that the model is primarily used for the valuation of public corporations, for which purpose the model is an excellent stock valuation tool.

## B. DISCOUNTED SUBSTANCE PRICING MODEL

There is no theoretical, recognized model for the valuation of a business activity However, there are a number of methods that are primarily based on the earning capacity of a business activity, the book value of the assets related to the activity, and a given goodwill, which is estimated to be related to that particular activity Besides that, the value is the value that can be negotiated between the parties

## V. PROBLEMS WITH PRIOR ART:

### A. DISCOUNTED SHARE PRICING MODEL

The most widely recognized theoretical model for the valuation of corporations today is based on a mathematical model, which discounts future cash flows plus a discounted "perpetual annuity" This model is best applied to public corporations that have free access to the capital markets and whose stocks are relatively easily negotiable, thereby reducing the investor's risk

Different valuation requirements apply to the trading of small and medium-sized unlisted businesses Using a model based on perpetuity would imply that a purchaser would pay a too high price relative to the risk assumed At the same time, it is not realistic to presume that such a corporation will "live" forever. Furthermore, a purchaser should be allowed, within a given period of time, to have his investment paid back. The reason is that this type of investment is an investment in a corporation in its entirety, not just in a part of it The purchaser acquires the corporation with a view to living by the future earnings which the corporation can generate and having the investment paid back over a given period - the "pay-back" period.

### B. DISCOUNTED SUBSTANCE PRICING MODEL

A model making allowance for the aspects involved in a correct valuation of the goodwill related to a business activity has long been required for purposes of estimating the value of business activities Such aspects may be tangible assets in the form of current assets and fixed assets relating to the activity in question Any intangibles in the activity concerned are not included What is needed is a method with which, based on some given conditions, the size of the goodwill relating to the activity, and thus the operations, may be estimated

## VI. SOLUTION/BACKGROUND FOR THE INVENTION:

The fact that it is not adequate to value unlisted corporations on a perpetuity basis has prompted a need for a cash flow model that makes allowance for the duration of an unlisted corporation This duration reflects the period for which a correct and - as far as the first year is concerned - audited budget may be prepared and discounted at a given discount rate DSPmodel® is programmed so as to be able to value corporations with a duration of 1-20 years There are two reasons why the model does not exceed this 20-year limit.

Firstly, experience has shown that only very few small and medium-sized corporations have a theoretical duration of more than 20 years.

Secondly, should the need to exceed the 20-year limit arise, the preparation of a budget would involve so much uncertainty that it would require precisely a model that applies a terminal value in the valuation of the relevant corporation in order to eliminate some of the uncertainties connected with the budget.

DSPmodel® has a built-in element, which, on the basis of an extensive analysis of the corporation concerned, estimates a weighted average duration representing the duration of the budget period applied in the valuation. DSPmodel® estimates the value exclusively on the basis of a given budget period, which means that the model does not apply a terminal value for purposes of the estimation

Preferably, the DSPmodel® does not only estimate a "stand-alone" value, but also a separate "synergy value" There is provided a separate form in the Invention, which evaluates and estimates the financial values of the synergies resulting from the joint operation of two corporations These "synergy values" are included as a separate value in the final valuation, made up by the booked equity, the stand-alone value and the synergy value The synergy values are included in a given number of years, subject to a given allocation/split between the purchaser and the seller

## A. CASH FLOW APPLIED IN THE DISCOUNTED SHARE PRICING MODEL

The discounted future earnings are adjusted for such future investments as are needed to maintain the assets and, thus, the basis of earnings, on the basis of the depreciation/amortization resulting from these investments (the required investments will equal the depreciation/amortization provided in the period) The cash flow is also adjusted for the synergies that would result from an integration of two or more corporations The synergies apply to both "saved" expenses and "additional" expenses resulting from a merger

## B. CASH FLOW APPLIED IN THE DISCOUNTED SUBSTANCE PRICING MODEL

The operating budget prepared and estimated in connection with the trading of activities is adjusted for the depreciation/amortization and interest expenses which the purchaser incurs Consequently, the valuation is based on the purchaser's post-acquisition situation

## C. DISCOUNT RATE

The discount rate applied for purposes of this model is the after-tax yield that an investor will require on a given investment This yield consists of a risk-free rate of interest (prime/base rate) plus a risk premium reflecting the risk profile of the corporation in question, based on a thorough analysis of the corporation For justification purposes, the above-mentioned rate is bench-marked against the average annual risk premium on small cap stock listed on a stock exchange over the last 10 years and against a yield index concerning acquisitions of unlisted corporations The risk-free interest will typically correspond to the return that a government bond with the same duration as the duration of the business/budget period could yield

A direct comparison with public corporations is not appropriate due to the higher risk premium that an investor would expect to earn by acquiring a corporation in its entirety, as it would not be possible in this situation to diversify part of the risk as may be done by purchasing stock on a stock exchange (acquisition of parts of a corporation) Experience shows that an investor will typically expect a risk premium that is 2-4% higher as regards unlisted corporations than as regards public corporations.

## VII. ADVANTAGES ACHIEVED

## A. DURATION OF THE BUDGET PERIOD

The absolutely unique and landmark feature of the DSPmodel® is the possibility of evaluating and estimating the duration of the corporation and, thus, of the budget period In order to be able to estimate such a duration on a realistic and fair basis, one needs to have profound knowledge of the corporation in question, which can be achieved through a preliminary analysis and description of the corporation Furthermore, the analysis forms the basis for the budgeting and evaluation of potential synergies. The DSPmodel® integrates the following analysis model, which is sub-divided into 4 part analyses, for purposes of estimating the duration.

## 1. The corporation's products

An evaluation and estimation of the corporation's product portfolios, their product life cycle and the general life of the products, the corporation's ability to develop new and existing products and the extent to which the corporation has ensured trademark and/or patent protection with regard to its products These questions are answered in consideration of whether the corporation is a manufacturing, commercial trading or service business The DSPmodel® can, of course, also be applied to a corporation addressing several business areas, including commercial trading and service businesses

## 2. The corporation's market position

An evaluation and estimation of the corporation's existing customers and suppliers and of whether the corporation already does or has an opportunity to market its products in other states and countries In addition, the market addressed by the corporation is evaluated in general

### 3. The corporation's productive equipment

An evaluation and estimation of the current technological level and the state of the corporation's machinery and operating equipment, buildings and leases, IT and of its environmental/ethical standards

### 4. The corporation's human resources

An evaluation and estimation of the current staff mix by function relative to what is considered an optimum staff mix in the corporation concerned. as well as the average age and seniority of the staff Furthermore, the level of further education of staff, the staff competence level and the management of the corporation are evaluated.

The results of the individual part analyses are summarized in a form, which estimates a weighted average score reflecting the duration of the corporation and, thus, of the budget period.

The analysis of duration applies to the estimation of the value of both a corporation and a business activity

### VIII. DESCRIPTION OF FIGURES, TABLES AND DIAGRAMS:

**Fig. 1:**        shows the factors affecting the value of a given equity

**Fig. 2:**        is a flow diagram showing the stages to be carried through in order to follow the procedure in the DSPmodel® and, thus, the Invention

**Fig. 3**         illustrates the correlation between the processes comprised by the Discounted Share Pricing model and the factors affecting this model

**Fig. 4:**        illustrates the correlation between the processes comprised by the Discounted Substance Pricing model and the factors affecting this model

**Diagrams 1-4:**   show an example of a previously conducted Discounted Share Pricing

**Tables 1-5:**   show an example of an analysis of duration

**Forms A-G:**   show an example of a previously conducted Discounted Substance Pricing

### IX. DETAILED DESCRIPTION OF THE INVENTION:

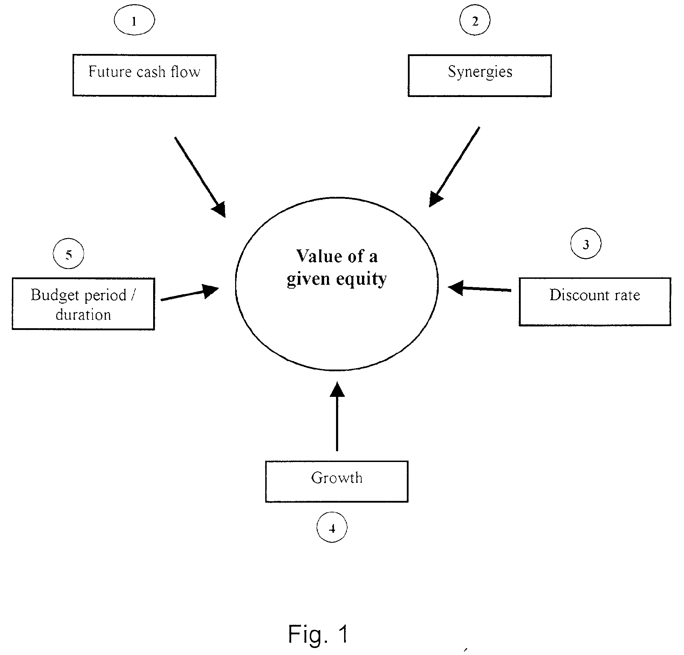

Figure 1 shows the factors affecting the value of a given equity as described above. A more detailed account of such factors will not be given for purposes of the Invention

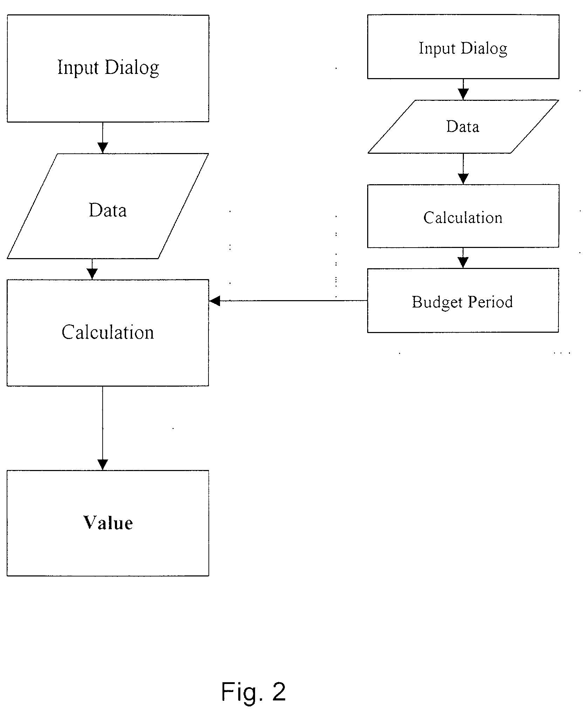

Figure 2 is a flow diagram showing the stages to be carried through in order to follow the procedure in the DSPmodel® and, thus, the Invention. The flow diagram consists of a main line with a first input dialog, giving input on, for example, budgets, synergies, discount rate and other relevant prerequisites except for the budget period. The budget period is estimated as stated in the side branch of the main line: with an input dialog providing information about the corporation's products, market position, productive equipment and staff These input make up the basis on which the budget period is estimated, and this estimate and the input from the main line represent the total data on which the valuation of a corporation or a business activity is based.

The input dialog in both the main line and the side branch is performed mainly by means of a PC, possibly via an electronic network The data representing the basis of calculation are mainly stored on a PC or a disc, whereas the actual calculation may be performed either on a PC, for instance by using a spreadsheet, on a server linked to an electronic network, or on a client PC linked to an electronic network, for example as a script performed by means of a browser on the client PC

The calculation results may either be displayed, printed out or stored on a disc for later use

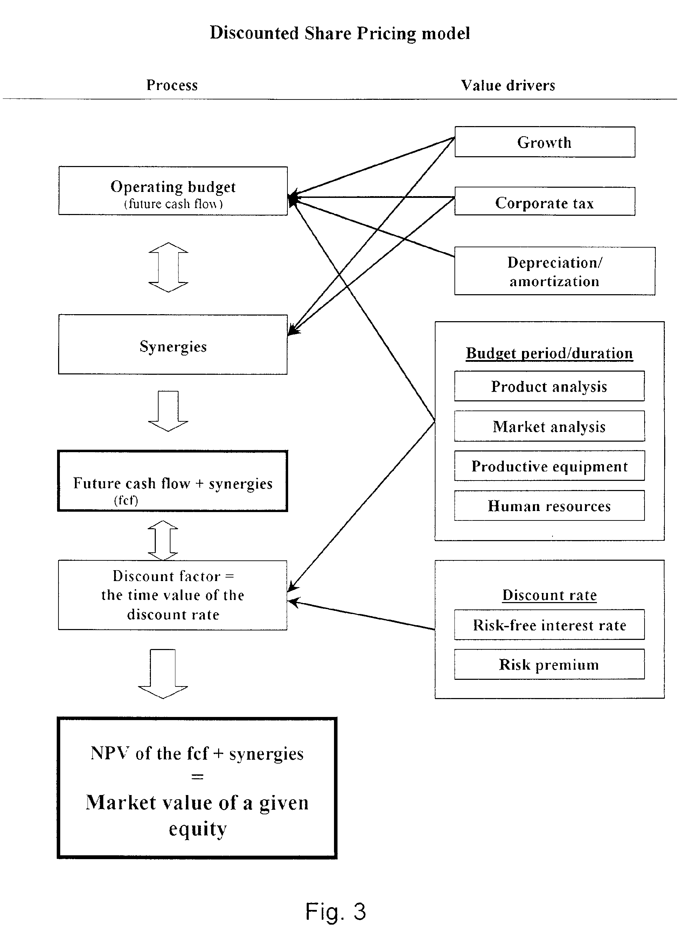

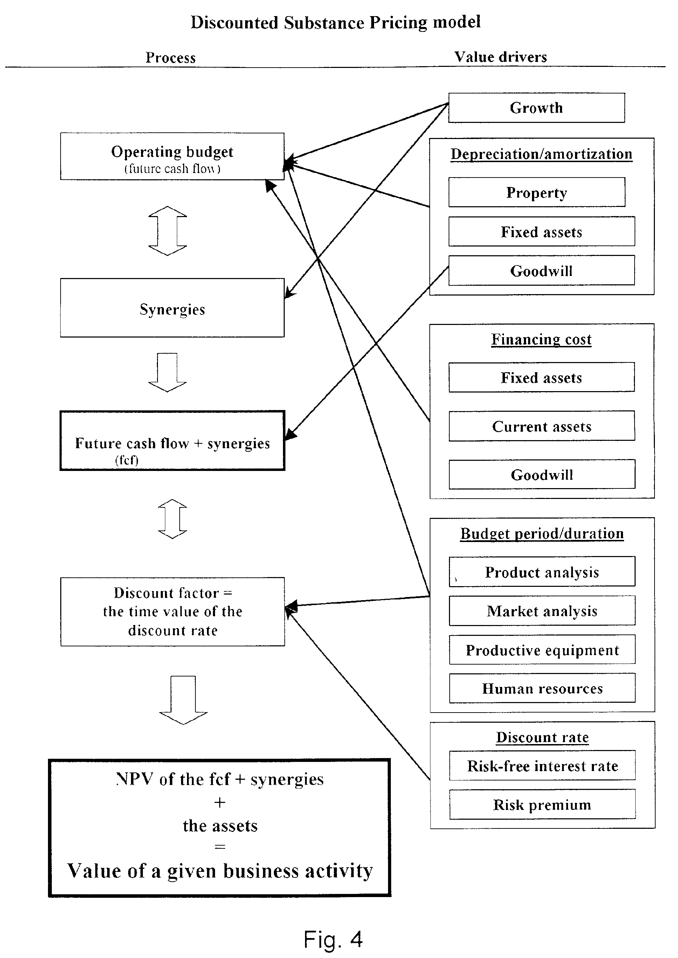

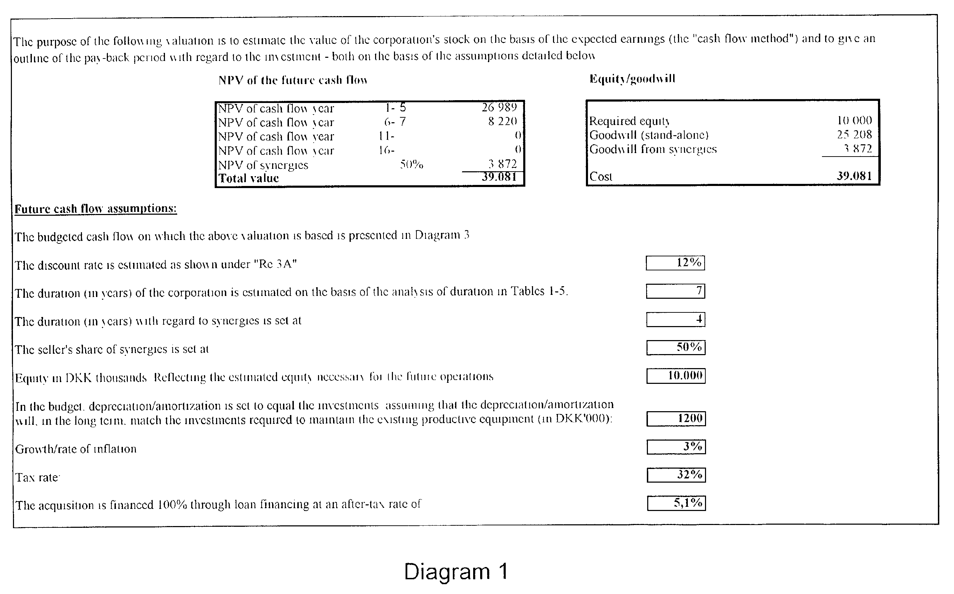

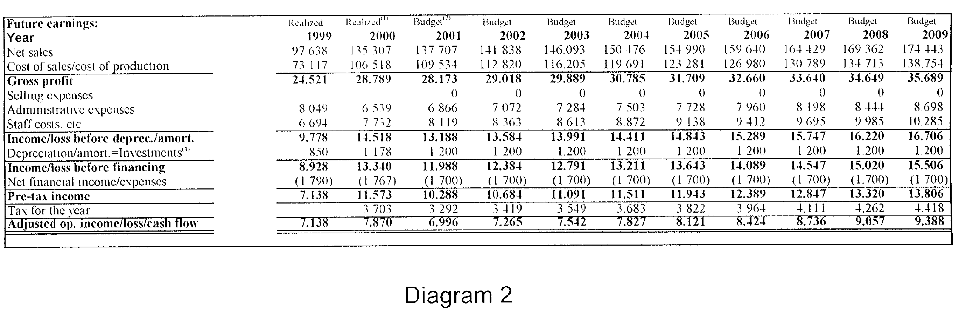

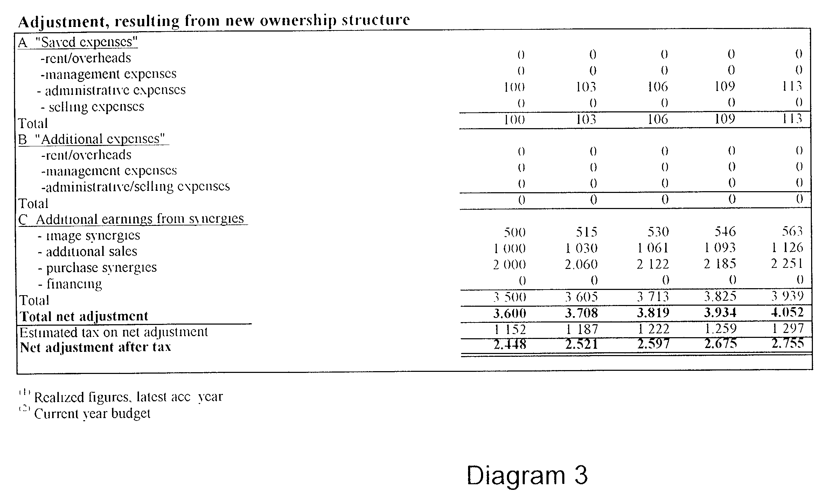

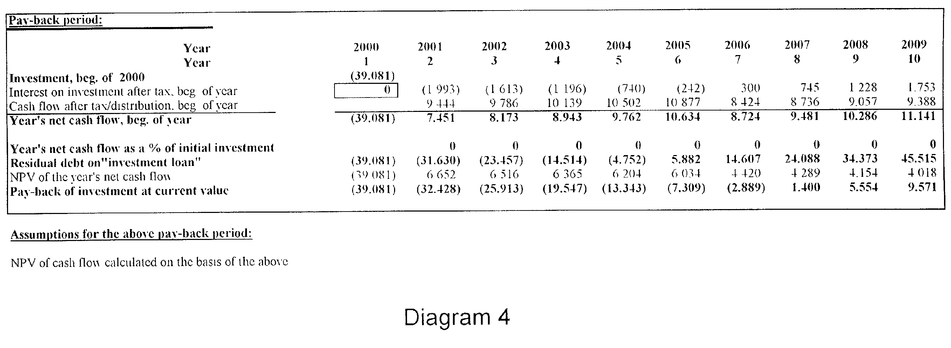

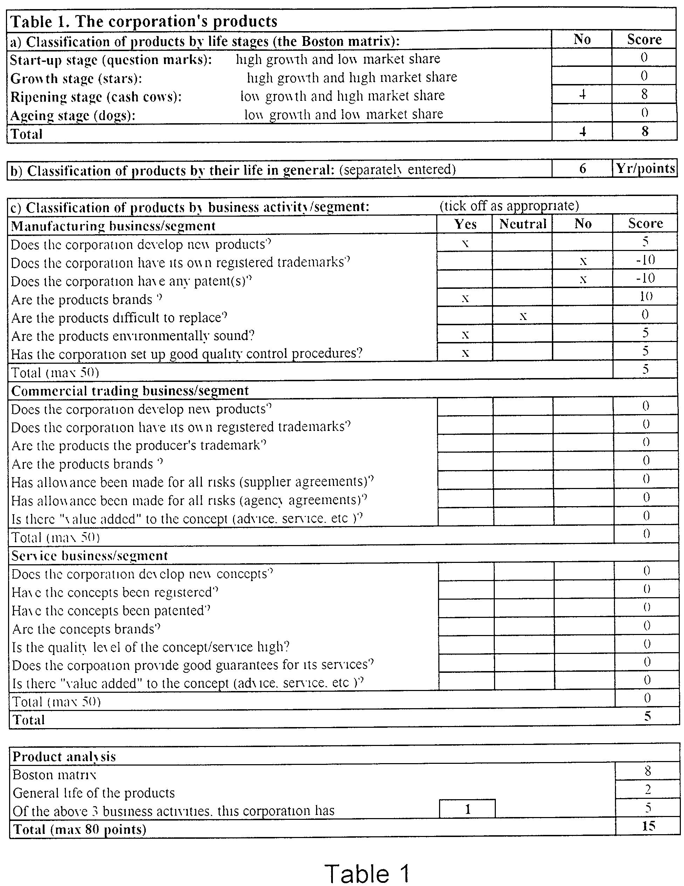

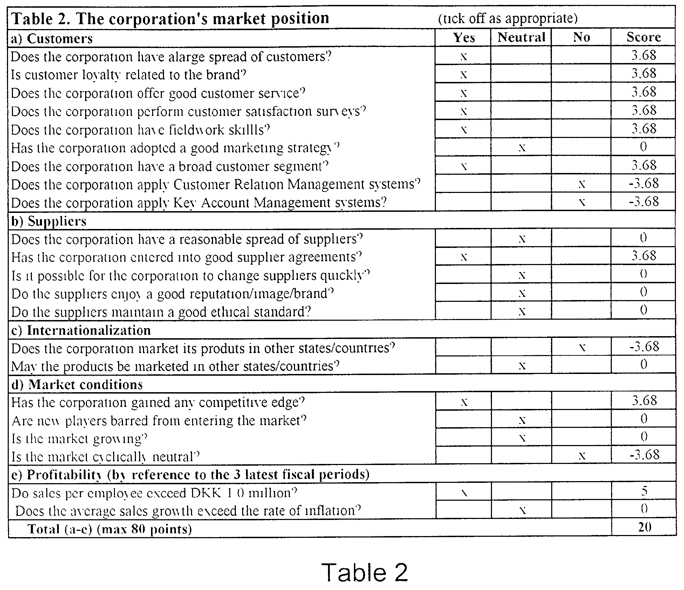

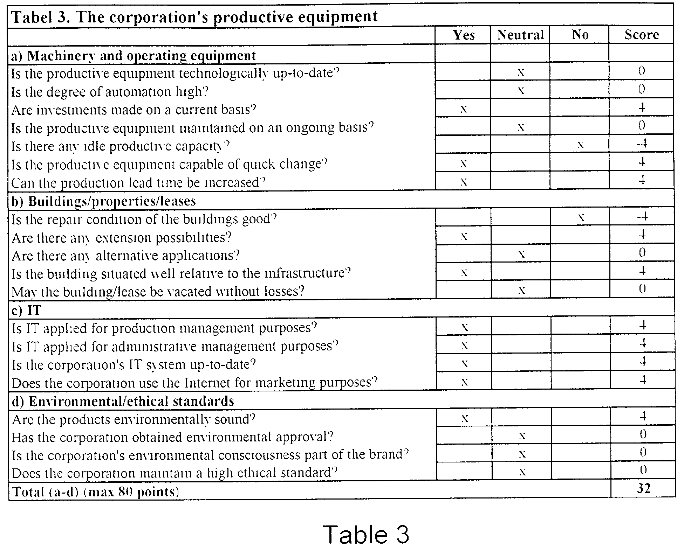

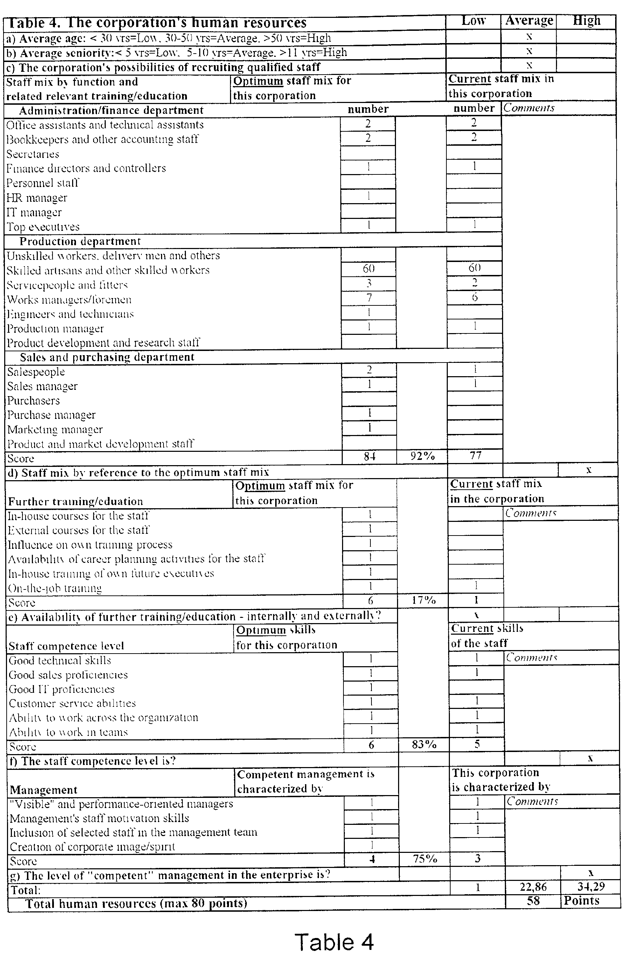

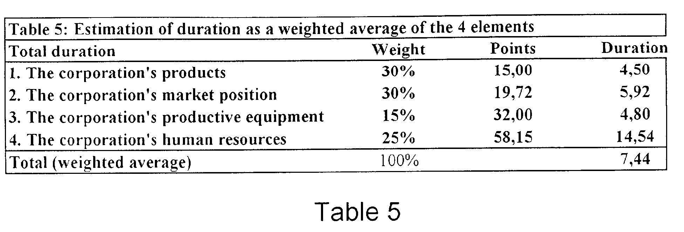

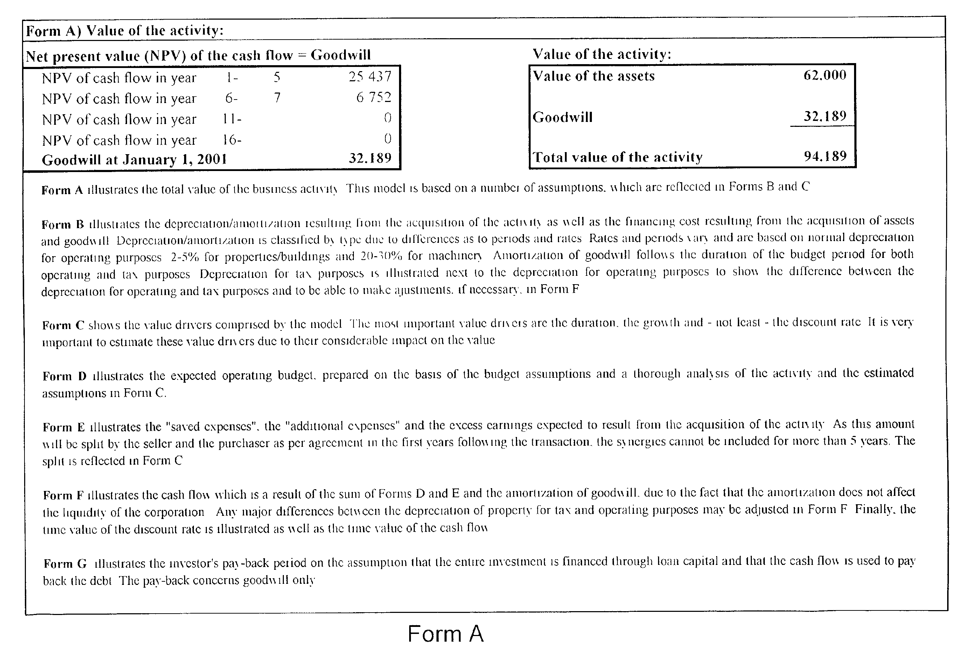

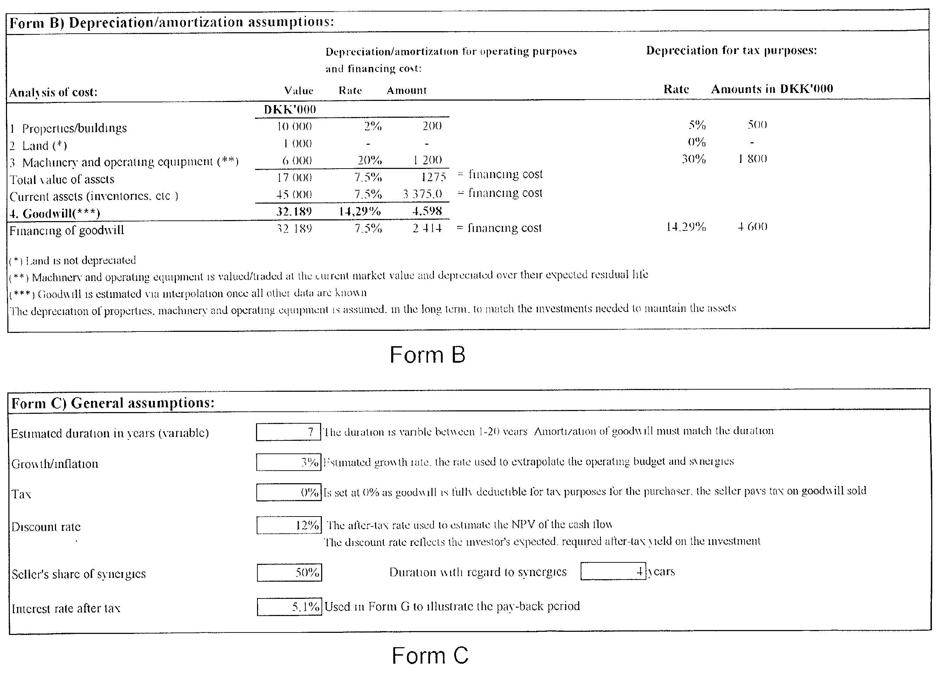

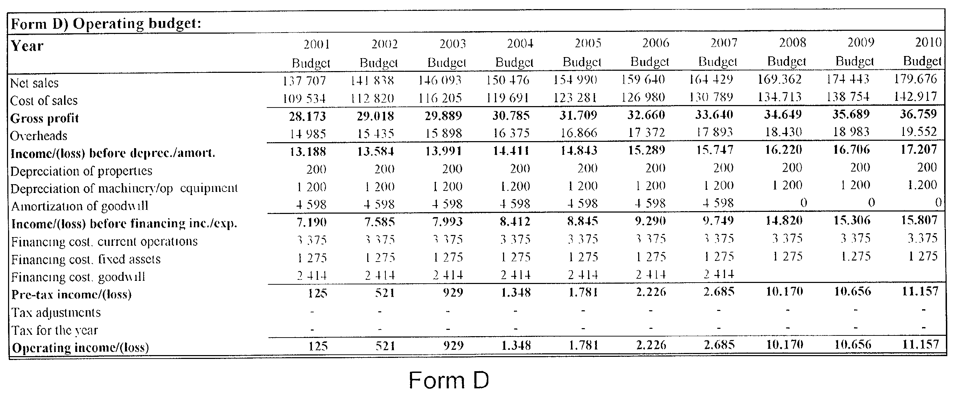

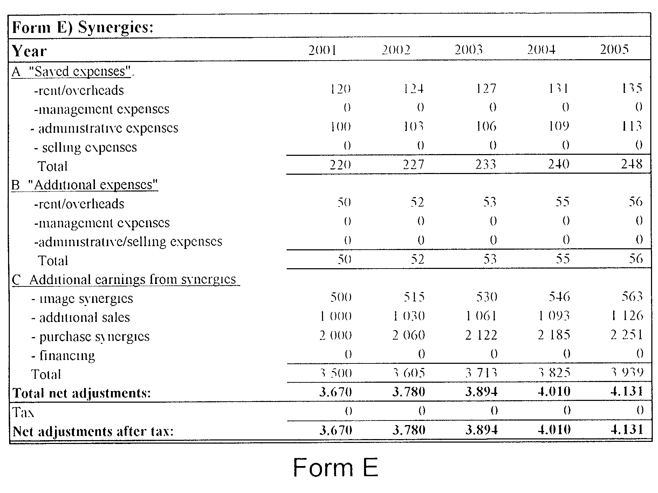

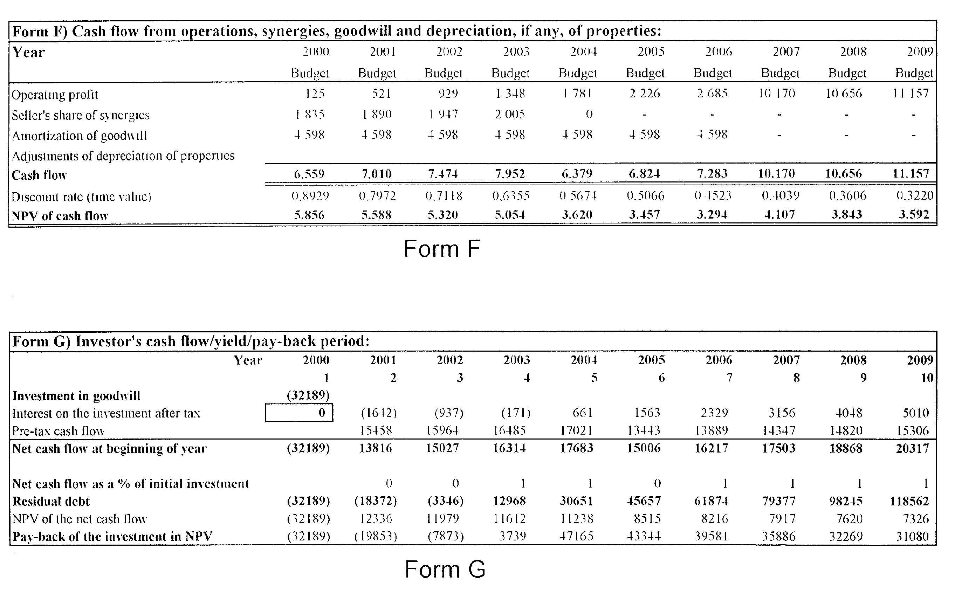

Figure 3 shows the correlation between the processes comprised by the Discounted Share Pricing model and the factors affecting this model, whereas Figure 4 shows the correlation between the processes comprised by the Discounted Substance Pricing model and the factors affecting this model As this correlation is described above, no more details will be given here

The Discounted Share Pricing model will first be described in the following with reference to an example shown in Diagrams 1-3 and Tables 1-5, and the Discounted Substance Pricing model will then be described with reference to an example shown in Forms A-G

## A. DISCOUNTED SHARE PRICING MODEL

The following detailed description of the model is based on the working process followed in the practical application of the model for purposes of the valuation of a corporation The results of an example of such a valuation are shown in Diagram 1 The way in which these results have been arrived at will be reviewed in detail below

The description of the Discounted Share Pricing stock valuation model comprises the following items

*1) Preparation and adjustment of the budget and the future growth rate*

*2) Evaluation and estimation of synergies*

*3) Evaluation and estimation of the discount rate*

*4) Discounting of operations and synergies*

*5) The investor's pay-back period*

*6) Estimation of duration*

*Re 1) Preparation and adjustment of the budget and the future growth rate, Diagram 2*

The future budget is prepared on the basis of a conventional statement of income, adjusted for the investments required to maintain the assets needed to ensure the future earnings basis Adjustment is made for the depreciation/amortization prompted by these investments. This is done on the assumption that the depreciation/amortization provided will match the investments in the long term. The necessary budget assumptions are evaluated and estimated to ensure a correct and audited budget.

Where prior year net income accumulated over stockholders' equity is distributed to the owner, an adjustment will have to be made for the additional interest expenses which the purchaser will incur as a result of the increased debt that needs to be raised to finance the assets and the day-to-day operations.

In by far the majority of cases, it is only necessary to prepare one year's budget, as the rest of the years in the budget period will be a projection of the first year's budget at a given growth rate determined on the basis of a historical analysis of the corporation's previous rate of growth and a general industry and market analysis with a view to assessing the corporation's future growth potential This current growth rate is related to the rate of inflation in the market in which the corporation operates

The budget comprises the following items

Net sales
Cost of sales/cost of production
**Gross profit**
Selling expenses
Administrative expenses
Staff costs
**Income/loss before depreciation/amortization**
Depreciation/amortization = investments
**Income/loss before financing**
Net financial income/expenses
**Pre-tax income/loss**
Corporate income tax paid
**Adjusted operating income/loss/cash flow**

*Re 2) Evaluation and estimation of synergies, Diagram 3*

The synergies are the synergies that may be achieved by integrating the acquired corporation with the purchaser's existing business It is evident that the more the purchaser manages to reduce costs in the operating budget, and the more sales may be increased as a result of the integration, the higher will the value of the corporation be in the eyes of the purchaser As a result, the seller must be compensated, by means of a higher price, for the synergies which the purchaser will get. It is, of course, also possible that a business integration may result in additional costs, for which reason the model is designed so as to make allowance for an adjustment of such potential extra costs One might imagine a situation in which a seller has had very moderate management expenses for several years A new owner would probably incur higher management expenses, which would have an adverse effect on the operating income and, thus, the price

The model allows for the fact that the purchaser and the seller may negotiate to split these synergies in the price between them according to a specified allocation key The model is programmed so as to include the synergies for up to a maximum of 5 years. After this period, the acquired corporation will be fully integrated with the acquiring corporation, and the synergies will therefore have been leveled off.

As it will appear from the above, the synergies comprise both the "saved expenses" and the "additional expenses" related to an integration of the corporations involved The model further allows for extra earnings resulting from joint operation as a consequence of the image synergies, the increased purchase synergies and the general excess sales made possible by the business integration

The form used to estimate the synergies comprises the following items:

1 "Saved expenses"

- rent/overheads
- management expenses
- administrative expenses
- selling expenses
- Total

2 "Additional expenses"

- rent/overheads
- management expenses
- administrative/selling expenses
- Total

3 Additional earnings resulting from synergies

- image synergies
- excess sales
- purchase synergies
- financing
- Total

**Total net adjustment**
Estimated tax on net adjustment
**Net adjustment after tax**

*Re 3) Evaluation and estimation of the discount rate*

Quite a few problems with regard to the estimation of the WACC arise in connection with the valuation of small and medium-sized unlisted corporations The reason is that unlisted corporations do not have access to the market data needed to estimate the yield and the market risk as regards the business types in question. The yield required by an investor on a given investment is determined on the basis of, for instance, these factors These market data may be estimated for public corporations, as they are being traded and valued in the market on a current basis, which is not the case for unlisted corporations

Against this background, this model applies a discount rate reflecting the investor's expected, required yield, consisting of a risk-free interest rate and a risk premium reflecting the risk profile of the corporation concerned A good estimate as regards the risk-free interest rate is a government bond with the same duration as the budget period, which is applied in the valuation in question, which estimate is consistent with the theoretical considerations and rules with regard to an estimate of the risk-free interest rate in the WACC

In order to give a reasonable and fair estimate of the risk premium, the premium is related to an index established on the basis of previous trade in small and medium-sized corporations, conducted by the inventor of the DSPmodel®. On the basis of these prior transactions, the risk premiums required by the investor when investing in the relevant indices have been classified within these indices, i e. commercial trading and service businesses and industrial businesses. This index is related to the average annual risk premiums resulting from small cap stock over a period of 10 years on a stock exchange in a given state or country, from which the corporation is operated

The classification described above has resulted in the following index (DSP index)

|  | Commercial trading and service sector | Industrial sector |
|---|---|---|
| **Risk premium** | 4 - 8% | 2 - 6% |
| **Risk-free interest rate** | approx 6% | approx 6% |
| **Discount rate** | 10-14% | 8-12% |

### *Re 4) Discounting of operations and synergies*

On the basis of the adjusted operating income after tax, a given discount rate and a given duration, the NPV of operations may be estimated on the basis of a well-known mathematical formula - the cash flow discounting formula

$$NPV = \frac{CF_1}{(1+k)^1} + \frac{CF_2}{(1+k)^2} + \quad + \frac{CF_n}{(1+k)^n}$$

where

NPV = Net Present Value
$CF_n$ = the adjusted operating income in "n" period
K = the discount rate

As this formula is well-known, it has not been included as any new method for purposes of this Invention

The after-tax income from synergies is discounted in a similar way using the same discount rate. The duration is variable for up to 5 years, as described earlier

### *Re 5) Investor's pay-back period, Diagram 4*

Provided that the investor finances the entire transaction, it is possible by way of this form to illustrate the investor's pay-back period on the basis of a given interest after tax, reflecting the market rate of interest after tax at which the investor could borrow Furthermore, it is a presumption in the model that the entire operating income is applied towards installments on the loan

### *Re 6) Estimation of duration, Tables 1-5*

The Invention comprises an analysis model, which is sub-divided into 4 part analyses, for purposes of estimating the duration of a corporation, corresponding to the duration of the budget period in the DSPmodel®. These 4 part analyses comprise the areas and aspects considered essential by the inventor of the DSPmodel® with regard to a corporation's future operations and, thus, its future subsistence basis

The analysis of duration is programmed so as to enable an adjustment of the weight of the 4 part analyses in the final estimation of the duration This is due to the fact that the distribution of the weights in order to arrive at an optimum situation giving a fair estimate of the duration of the corporation depends on the individual corporation. Furthermore, the model is programmed so as to estimate a duration of max. 20 years

The 4 part analyses, including sub-sections, are as follows.

**a) The corporation's products**

1) Classification of the products by stages in their life cycle (according to "the Boston matrix")
2) Classification of the products by their life in general
3) Classification of the products by business activity or segment, including manufacturing, commercial trading and service business

**b) The corporation's market position**

1) Customers
2) Suppliers
3) Internationalization
4) Market conditions
5) Profitability

**c) The corporation's productive equipment**

1) Machinery and operating equipment
2) Buildings/properties/leases
3) IT
4) Environmental/ethical standards

**d) The corporation's human resources**

1) Average age
2) Average seniority
3) The corporation's possibility of recruiting qualified staff
4) Current staff mix relative to the optimum staff mix
5) Further training/education opportunities
6) Staff competence level
7) Level of "good" management in the corporation

The following is a detailed description of the individual part analyses, the issues referred to in the part analyses and a brief description of the significance of these issues. It should be noted in this respect that even if it may seem difficult to see the impact and relevance of some of the questions in the analysis of duration, the 4 part analyses should be seen in their entirety As none of the questions can stand alone, many efforts have been made to determine how each individual question in the individual part analyses should be weighted by reference to the entirety

**a) The corporation's products, Table 1**

**1) Classification of the products by stages in their life cycle (according to "the Boston matrix")**

The corporation's products are classified by 4 life cycles according to the well-known Boston matrix

■ **Start-up stage** (question marks), characterized by products with a high growth rate and a low market share
■ **Growth stage** (stars), characterized by products with a high growth rate and a high market share
■ **Ripening stage** (cash cows). characterized by products with a low growth rate and a high market share
■ **Ageing stage** (dogs), characterized by products with a low growth rate and a low market share

The number of products in the individual stages is entered in a form, the number is multiplied by a pre-programmed score, and a total score on the Boston matrix is made up Scores are allocated so that the **growth stage** and the **ripening stage** are given the highest score based on the view that the products in these stages are the ones that are most profitable for a corporation

**2) Classification of the products by their life in general**

The general life of the corporation's products is evaluated The number of years entered is included is the total estimation for the product analysis.

**3) Classification of the products by business activity or segment**

A distinction between 3 types is made:

a) Manufacturing business/segment
b) Commercial trading business/segment
c) Service business/segment
If the relevant corporation operates within more than one of the business types outlined above, such as commercial trading and service businesses, the model will automatically estimate an average score based on the actual number of "types" covered by the corporation.

The following questions within the individual type of business must be considered, as they are regarded as having a significant impact on the future earning capacity of a corporation.

**a) Manufacturing business/segment:**

- Does the corporation develop new products? - *it is important for the corporation to be at the cutting edge of the consumers' requests and requirements.*
- Does the corporation have its own registered trademarks? - *trademarks provide security, and there is a good signaling value in having the products registered. This also applies to design protection.*
- Does the corporation have any patent(s)? - *a very important signal that the corporation has managed to invent something unique, which is worth protecting and which may ensure a long-term earnings basis.*
- Are the products *brands? - it is important that the corporation is able to create products that meets the customers needs and gives them value.*
- Are the products difficult to replace? - *this gives an idea of the risk inherent in the fact that the corporation's customer segment is constantly offered similar products and, thus, may choose other suppliers' products.*
- Are the products environmentally sound? - *consumers*

*are becoming increasingly environmentally conscious, prompting the producers to signal environmentally sound production.*

- Has the corporation set up good quality control procedures in respect of its products? - *the better the quality control measures are, the fewer complaints for the corporation and, thus, indirectly a better image.*

**b) Commercial trading business/segment:**

- Does the corporation develop new products? - *same as above.*
- Does the corporation have its own registered trademarks? - *including in particular private labels, etc.*
- Are the products the producer's trademark? - *again, what is important is the signaling value of a product that has been registered as a trademark.*
- Are products brands? - *same as above.*
- Has the corporation made due allowance for all risks related to supplier agreements (including the term/duration of such agreements)? - *this question has much weight, as the continued existence of a commercial trading business depends on its supplier agreements. If such agreements can be terminated at short notice, the corporation will become more vulnerable. Furthermore, these agreements relate to the corporation with its existing owners and*

*not necessarily a new owner who is to be approved by the suppliers.*

- Has the corporation made due allowance for all risks related to agency agreements (including the term/duration of such agreements)? - *same argument as above under supplier agreements.*
- Is there "value added" to the products/concept? - *it is important that a commercial trading business is able to offer good service and advice, if appropriate, in connection with the products it markets in order not to seem just a middleman that may be dispensed with. It is important for a corporation to be able to create and secure its existence by providing the customers with a "full-service " program.*

**c) Service business/segment:**

- Does the corporation develop new concepts? - *same as above.*
- Have the concepts been registered? - *same as above.*
- Have the concepts been patented? - *same as above.*
- Are the concepts brands? - *same as above.*
- Does the corporation provide good guarantees for its services? - *customers should feel secure when using the corporation.*
- Are there "value added" to the concept? - *same as above.*

The questions are formulated so that YES gives a positive score, NEUTRAL gives a score of 0 and NO gives a negative score

The maximum score that can be obtained in the product analysis is 80 points

**b) The corporation's market position, Table 2**

**1) Customers:**

- Does the corporation have a large spread of customers? - *a corporation which sells its products to a few large customers only is more vulnerable and is more at risk of going bankrupt if it loses a customer.*
- Is customer loyalty related to the brand? - *a corporation whose customers represent a loyal and sustained group will, all things being equal, face a brighter future than a corporation whose customers are disloyal.*
- Does the corporation offer good customer service? - *reflects the corporation's intention to retain its customers and give them a valuable experience, thus strengthening the corporation's image in the long term.*
- Does the corporation perform customer satisfaction surveys? - *shows that the corporation is conscious of the value of carrying out activities to build customer goodwill.*
- Does the corporation have fieldwork skills? - *good fieldwork with regard to sales not only contributes to getting more customers, it also contributes to profiling the corporation's name and products, thus making the corporation known by the consumers.*
- Does the corporation have a broad customer segment? - *refers to the corporation's market potential.*
- Does the corporation apply Customer Relation Management systems? - *an important tool enabling the corporation to follow up on customers and, thus, create a high level of service and a high degree of satisfaction.*
- Does the corporation apply Key Account Management systems? - *another tool with which the corporation may improve the level of service and the degree of satisfaction. A corporation signals seriousness in that its customers know their contact person in the corporation and that this contact person is aware of the customer's requirements.*

**2) Suppliers:**

- Does the corporation have a reasonable spread of suppliers? - *a corporation should not bring itself in a position where failing suppliers may bring the corporation in dire financial straits.*
- Has the corporation entered into adequate supplier agreements? - *in terms of both price, quality and reliability of delivery.*
- Is it possible for the corporation to change suppliers quickly? - *It is important in case of failing supplies that the corporation can have the relevant goods delivered by another supplier in order not to lose orders and, thus, sales.*

- Do the suppliers enjoy a good reputation/image/brand? - *as a supplier's bad reputation may quickly impact on the corporations dealing with the supplier, such a situation should be avoided.*
- Do the suppliers maintain a good ethical standard? - *again, a supplier's bad reputation may quickly impact on those dealing with him. It is important for a corporation to signal to the consumers that it rejects unethical products.*

**3) Internationalization:**

- Are the products marketed in other states/countries? - *reflects the corporation's market potential.*
- May the products be marketed in other states/countries? - *if not, the corporation's market potential is relatively limited.*

**4) Markets:**

- Has the corporation gained any competitive *edge? - if so, the corporation will, all things being equal, be in a better situation than its competitors and may exploit this situation to conquer a larger market share.*
- Are new players barred from entering the market? - *if new players find it hard to gam a foothold in this particular market, the corporation does not have to use a lot of resources on maintaining its market share.*
- Is the market growing? - *a growing market is of course more attractive and a stagnant one.*
- Is the market cyclically *neutral? - reflects whether the corporation's earnings may be expected to be stable or whether a reservation must be made for "poor" times.*

**5) Profitability (by reference to the last 3 accounting periods):**

- Does the average sales growth exceed the rate of inflation? - *reflects whether the corporation is able to create more growth than the general growth in society.*
- Do sales per employee exceed DKK 1 0 million? - *this limit is used as a rule of thumb in determining whether the em ployees are profitable and, as a minimum, earn their own pay.*

Again, the questions are formulated so that YES gives a positive score, NEUTRAL gives a score of 0 and NO gives a negative score
The maximum score that can be obtained from the analysis of the corporation's market position is 80 points

**b) The corporation's productive equipment, Table 3**

**1) Machinery and operating equipment:**

- Is the productive equipment technologically up-to-date? - *reflects the corporation's capability of and attitude to keeping abreast of developments and, thus, reflects its chances of survival.*
- Is the degree of automation high? - *shows the corporation's ability to use and exploit the technical potentialities within its field of business*
- Are investments made on a current basis? - *new assets have a longer economic life, and no big investments will need to be made in the near future.*
- Is the productive equipment maintained on an ongoing basis? - *reflects the general quality and state of the productive equipment*
- Is there any idle productive capacity? - *reflects whether it is possible to increase productivity without having to invest in extra machinery and equipment.*
- Is the productive equipment capable of quick change? - *reflects the flexibility of the productive equipment and, thus, the corporation's possibility of fulfilling urgent orders.*
- Can the production lead time be increased? - *reflects the possibility of trimming production to increase profitability.*

**2) Buildings/properties/leases:**

- Is the repair condition of the buildings good? - *gives an idea of future investment requirements, which will influence earnings.*
- Are there extension possibilities? - *the possibility of extension without having to move to other buildings.*
- Are there any alternative applications? - *reflects the possibilities of disposing of the buildings on a sale or on a possible diversion of production.*
- Is the present situation of the building adequate by reference to the infrastructure? - *a question of logistics.*
- Is it possible for the corporation to vacate the building/leasehold premises without incurring any loss? - *good exit opportunities will save the corporation money in the long run.*

**3) IT:**

- Does the corporation apply IT for production management purposes? -
- Does the corporation apply IT for administrative management purposes? -
- Is the corporation's IT system up-to-date? -
- Does the corporation use the Internet for marketing purposes? - *all of the 4 questions listed above reflect the corporation's ability to exploit the opportunities of production and administration control in such a way that procedures and databases regarding customers, suppliers, staff and others may be stored and used for purposes of further development, and business procedures may be optimized in a controlled and well-documented manner.*

**4) Environmental/ethical standards:**

- Are the products environmentally sound? - *reflects the corporation's intention to meet the consumers' demand for environmentally sound products.*
- Has the corporation obtained environmental approval? - *gives an idea of the risk of large future costs of cleaning up polluted soil, etc.*
- Is the corporation's environmental consciousness part of the brand? - *an issue which many corporations consider an important element of their marketing activities, as environmental awareness is a good signal to give the consumers.*
- Does the corporation maintain a high ethical standard? - *says something about the corporation's ability intention to assume social responsibility. Furthermore, doubts as to a corporation's ethical standards can be very detrimental.*

Again, the questions are formulated so that YES gives a positive score, NEUTRAL gives a score of 0 and NO gives a negative score

The maximum score that can be obtained is 80 points

**c) The corporation's human resources, Table 4**

**1) Average age**

it is possible to choose between the following 3 different age groups

Low, Average and High, where Low reflects an average age below 30 years, Average an average age between 30-50 years, and High an average age above 50 years Average is considered optimum, as it provides a good mix of senior staff with valuable experience and young employees who can be trained to run the corporation in future

**2) Average seniority**

where Low reflects less than 5 years of seniority, Average between 5-10 years of seniority and High more than 11 years of seniority. Average gives the highest score here as well, based on the view that employees with 5-10 years of seniority will know the corporation well without being so anchored in the corporation that they are unable to change

### 3) The corporation's possibility of recruiting qualified staff

a general assessment based on the corporation's previous recruitment experience is made. A high score is given to corporations with good (High) possibilities of recruiting the qualified staff needed

### 4) Breakdown of staff by function and related relevant training/education

the corporation is broken down under the following 3 areas

a) **Administration/finance department,** broken down by function according to the number of

- *Office assistants and technical assistants*
- *Bookkeepers and other accounting staff*
- *Secretaries*
- *Finance directors and controllers*
- *Personnel staff*
- *HR managers*
- *IT managers*
- *Top executives*

b) **Production department,** broken down by function according to the number of

- *Unskilled workers, delivery men and others*
- *Skilled artisans and other skilled workers*
- *Service people and fitters*
- *Works managers foremen*
- *Engineers and technicians*
- *Head of production*
- *Product development and research staff*

c) **Sales and purchasing department,** broken down by function according to the number of.

- *Salespeople*
- *Sales manager*
- *Purchasers*
- *Purchase manager*
- *Marketing managers*
- *Product and market development staff*

The optimum staff mix by function and the number applicable to the corporation concerned can be stated in the left-hand side column of the form. It is presumed that an owner or manager will know the corporation well enough to know the optimum staff mix. The current staff mix by function and number can be ticked off in the right-hand side of the column

The relation between the current mix and the optimum mix is shown as a percentage of the optimum staff mix On the basis of a division into percentage ranges, the model will make up whether the current mix is Low, Average or High by reference to the optimum mix Low gives a negative score, Average gives a score of 0 and High gives a positive score

### 5) Further training/education opportunities - internally and externally

an evaluation of the extent to which the corporation makes sure its employees keep abreast of developments and possess the knowledge at all times required to be able to perform their job optimally The following questions are considered important in order to retain well-trained/educated and motivated employees

a) *Does the corporation offer in-house courses for its staff?*
b) *Does the corporation offer external courses for its staff?*
c) *Are the employees allowed to influence their own training process?*
d) *Are there any career planning activities for the staff?*

e) *Are own future executives offered in-house training?*

f) *Is there any on-the-job training in the corporation?*

As not all of these options are equally relevant to all corporations, the corporation may indicate any relevant questions in the left-hand side column It should be indicated in the right-hand side of the column which of the selected relevant questions the corporation may answer in the affirmative

As under item d) above, the score calculated depends on the percentage relative to the optimum situation. Low gives a negative score, Average a score of 0 and High a positive score.

**6) Staff competence level**

an evaluation of staff competencies within the relevant areas in the corporation concerned Areas evaluated

a) *Good technical skills*

b) *Good sales proficiencies*

c) *Good IT proficiencies*

d) *Customer service abilities*

e) *Ability to work across the organization*

f) *Ability to work in teams*

The optimum situation for the corporation in question relative to the current situation should be evaluated here as well A score will be calculated on the basis of the optimum situation relative to the current situation. Low gives a negative score, Average gives a score of 0 and High gives a positive score

**7) Level of competent management in the corporation**

evaluation of the management remaining in the corporation after a possible sale No evaluation is made in respect of the owner, as the owner has no influence on the corporation's future after a sale It is important to the corporation's future that the management is able to motivate its staff, perform and achieve results The evaluation is based on the following 4 criteria

a) *"Visible" and performance-oriented managers*

b) *Management's staff motivation abilities*

c) *Inclusion of selected staff in the management team*

d) *Creation of corporate image spirit*

The score is allocated as described above.

As in the other part analyses, the maximum score in the human resource analysis is 80 points

**8) Estimation of the duration of the corporation as a weighted average of the 4 part analyses, Table 5**

The results from the 4 part analyses are compiled in Table 5 and then weighted. The model automatically estimates the weighted average score. The individual weights vary depending on the corporation in question and may be adjusted in the model so as to give as realistic and fair picture of the corporation as possible.

The weighted average score reflects the duration of the budget period on which the value of the corporation concerned is based

*B. DISCOUNTED SUBSTANCE PRICING MODEL*

The results of an example of such a valuation are shown in Form A. Below is a detailed description of how the results are arrived at.

The description of the Discounted Substance Pricing model for the valuation of a business activity comprises the following items:

**Form A:** Value of the activity

**Form B:** Depreciation/amortization and financing cost assumptions

**Form C:**   General assumptions

**Form D:**   Operating budget

**Form E:**   Synergies, etc

**Form F:**   Cash flow from operations, synergies, amortization of goodwill and adjustment of depreciation, if any, of properties.

**Form G:**   Investor's cash flow/yield/pay-back period.

The model is based on a number of forms, each of which relates to a specific area, but which are, of course, connected and integrated, in order that - based on the data entered - they may estimate the maximum goodwill allowed by the required net income from the activity (after amortization over the duration)

**Re Form A: Value of the activity**

Form A sums up the value of the relevant activity in two sub-forms. One of these forms shows the goodwill based on the underlying formula in the model, whereas the other shows the aggregate value of the activity, including assets and goodwill.
Furthermore, Form A provides a brief description of the model and the considerations and assumptions related to the model

**Re Form B: Depreciation/amortization and financing cost assumptions**

When an activity is traded, it is primarily the asset, the staff, the customers and the operations that are purchased. Consequently, such a transaction, depending on the assets acquired, will allow the purchaser to depreciate fixed assets and - not least - amortize goodwill to a wide extent. This results in a number of tax implications At the same time, it is assumed in the model that the purchaser is to finance the transaction 100%, for which reason the interest expenses imposed on the purchaser are included in the operating budget
In concrete terms, the following assumptions have been made with regard to the individual assets comprised by the transaction

a) Properties/buildings- are stated at market value and depreciated at a rate corresponding to the standard rate of depreciation applicable in the state or country concerned.
b) Land - is stated at market value No depreciation can be provided in respect of land, but the value is included in the computation of the interest payable on the capital tied up in the fixed assets.
c) Machinery and operating equipment - are stated at market value and depreciated at a rate corresponding to the standard rate of depreciation applicable in the state or country concerned
d) Current assets, such as inventories and accounts receivable - are stated at the value agreed by the parties and according to the relevant accounting policy applied These assets cannot be depreciated
e) Acquired goodwill - is calculated in the model as the goodwill which the operations can justify via interpolation, once all other data are known.

The rates of depreciation/amortization are variable within the framework of the applicable legislation The model further presumes that the depreciation of properties/buildings, machinery and operating equipment will, in the long run, match the investments required to maintain these assets and, thus, maintain the future earnings basis
Goodwill is amortized over the duration and may be adjusted in accordance with the amortization rules applicable in the state or country concerned The model is programmed so as to customize the amortization of goodwill to the duration of the budget period. This way the investor is certain to benefit from the full taxable gain on the acquisition of the goodwill concerned
The interest rate at which the investor may raise the loans needed to finance the assets and the goodwill must be entered in Form B as well In the model, the fixed market rate of interest is applied. The model estimates the interest expenses on the individual group of assets and transfers these expenses to the operating budget Likewise, the amounts depreciated/amortized are automatically transferred to the operating budget
Form B further illustrates the depreciation for tax purposes to show the purchaser the consequences of the chosen rates of depreciation applied in the calculation The model is programmed so as to adjust the depreciation of properties/buildings in Form F in case the difference is significant

### Re Form C: General assumptions

The following value drivers need to be evaluated, as they are highly important in order to estimate the value as fairly as possible

a) **Duration -** estimated on the basis of the same analysis of duration as applies to Discounted Share Pricing.
b) **Growth/inflation -** made up on the basis of an adequate analysis of both the activity in question and the market and industry in general.
c) **Tax** - basically fixed at 0% on the assumption that the goodwill will be fully deductible for tax purposes for the purchaser, and that the seller is to pay tax on the goodwill sold Consequently, no tax is included in the valuation
d) **Discount rate** - determined on the basis of the index that applies to Discounted Share Pricing
**e) The seller's share of synergies -** one of the value drivers that may be adjusted during a negotiation. The basic assumption is that the seller will get 50%
f) **Duration as regards synergies** - this is variable for up to 5 years, based on the same arguments as in the case of Discounted Share Pricing
g) **Financing interest after tax** - the rate of interest applied to estimate the investor's pay-back period This interest is the interest after tax used to estimate the interest expenses in Form B.

### Re Form D: Operating budget

The operating budget is presented in such a way that only net sales, cost of production (the variable costs) and overheads need to be entered. The model makes up the rest The gross profit is a logical subtraction of net sales and cost of production The result is a subtraction of the gross profit and the overheads In Form D, amortization is reflected as individual items in order to explain and isolate the amortization of goodwill, as it is reversed in the basis of calculation in Form F Financing costs have been classified by function for instructional purposes as well. Amortization and financing costs are automatically transferred from Form B Consequently, if changes are made to Form B, these will be reflected in the operating budget

Further, it is necessary to enter figures in the first column of the budget only, as the model, based on the growth rate keyed in, projects the budget. Even though the entire form is automatically filled in, only those years that match the duration keyed-in will be included in the final valuation. Even though the form illustrates a 10-year budget period only, this will not affect the estimation of a duration exceeding 10 years Due to the underlying model programming, this model is also variable up to and including 20 years

### Re Form E: Synergies, etc.

Form E is identical to the form used in the Discounted Share Pricing model. However, trading in business activities often involves greater synergies than trading in stocks This is due to the fact that transactions involving a business activity are typically more obvious, strategic transactions, whereas stock transactions are more typically a question of Management Buy-Outs or Management Buy-Ins, where the synergies are not always so obvious

### Re Form F: Cash flow from operations, synergies, goodwill and adjustments of depreciation, if any, of properties

Form F summarizes the results from the operating budget, the seller's share of synergies and amortization of goodwill. Furthermore, it is possible in Form F to adjust the depreciation of properties in case of a significant difference between the depreciation for operating purposes and the depreciation for tax purposes Such adjustments must be entered manually in the form. The other factors are automatically transferred to Form F from Forms D, E and B, respectively

Only the seller's share of synergies is included in the valuation The argument for doing so is that, in principle, the purchaser will get the full effect of the synergies, but since these are highly dependent on the purchaser's ability to create these synergies in future, the purchaser in fact only pays a percentage of them. Some might claim that the seller it thus missing an additional price.

It should be noted in this respect that since the purchaser bears the entire risk, the seller should not be fully paid for any synergies on which the seller cannot exert any influence whatsoever

The argument in favor of reversing the amortization of goodwill in the basis of calculation is that this amortization is not cash-demanding in the form of new investments/reinvestments. The amortization has in fact a tax effect only in the operating budget, for which reason the decrease in the value of operations is not real

The timing effect of the discount rate is stated in Form F as well, illustrating the discount factors which, multiplied by the cash flow, give the NPV. Consequently, the goodwill in Form A is basically a summation of the estimated future NPVs in Form F

The actual goodwill estimated by the model is arrived at via interpolation by adjusting the goodwill in Form B Changes in this value will be reflected in the entire model and, eventually, in Form A The fact that the goodwill in Forms A and B are identical reflects the goodwill

**Re Form G: Investor's cash flow/yield/pay-back period**

Form G is identical to the corresponding form used in the Discounted Share Pricing model

**Claims**

1. A method for estimating a value of a corporation or a business activity, based on a cash flow model, under which an NPV of future earnings generated by the corporation or the business activity over a term of years is estimated on the basis of a given budget for the corporation or the business activity, a given discount rate and a given budget period, which budget period is estimated by means of a model based on selected factors relating to the corporation

2. A method according to claim 1, wherein a number of points are allocated to the various factors on the basis of a number of data, and wherein the points allocated to the individual factors are included in a mutual weighted ratio in the model applied to estimate the budget period.

3. A method according to claim 2, wherein the factors mentioned comprise the corporation's products, market position, productive equipment and human resources

4. A method according to claim 3, wherein allowance is made for the following for purposes of allocating points to the product factor

   - classification of the products by stages in their life cycle,
   - classification of the products by their life in general,
   - classification of the products by business activity/segment

5. A method according to claim 3, wherein allowance is made to the following for purposes of allocating points to the market position factor.

   - customers,
   - suppliers,
   - internationalization,
   - market conditions,
   - profitability

6. A method according to claim 3, wherein allowance is made to the following for purposes of allocating points to the productive equipment factor.

   - machinery and operating equipment,
   - buildings, properties and leases,
   - IT,
   - environmental/ethical standards

7. A method according to claim 3, wherein allowance is made for the following for purposes of allocating points to the human resource factor

   - average age of the staff,
   - average seniority,
   - the corporation's possibilities of recruiting qualified staff,
   - current staff mix relative to the optimum staff mix,
   - further training/education opportunities,
   - staff competence level,

- the level of good management in the corporation

8. A method for valuation of a corporation or a business activity, based on a cash flow model, under which an NPV of future earnings generated by the corporation or the business activity over a term of years is calculated on the basis of a given budget for the corporation or the business activity, a given discount rate and a given budget period, which budget period is estimated by means of a calculation model based on selected factors comprising the corporation's products, market position, productive equipment and human resources, wherein a number of points are allocated to said factors on the basis of a number of data, and the points allocated to the factors are included in a mutual weighted ratio in the model applied to estimate the budget period

9. A method according to claim 8, wherein the total number of points for each factor are maximum 80, and wherein the weighting between the individual factors is such that the maximum budget period estimated will be 20 years

10. A method according to claim 9, wherein the weighting between the various factors is customized to the corporation or business activity concerned

11. A method according to any one of claims 1-10. wherein the final valuation of the corporation or business activity includes an evaluation of a synergy value representing a financial value of synergies resulting form a joint operation of two corporations, said synergy value being included in a given number of years, subject to a given allocation/split between the two corporations

12. A method according to any one of claims 1-11, performed by means of a computer program installed on a computer, as the desired data are keyed into the computer, following which the computer program performs calculations for purposes of the valuation of a corporation or a business activity

13. A method according to claim 12, wherein the computer program applied is a standard spreadsheet program

14. A method for the estimation of a budget period for purposes of an estimation of the value of a corporation or a business activity, based on a cash flow model, in which the budget period is estimated using a model based on selected factors comprising the corporation's products, market position, productive equipment and human resources, wherein a number of points are allocated to said factors on the basis of a number of data, and the points allocated to the factors are included in a mutual weighted ratio in the model applied to estimate the budget period

15. A method according to claim 14, wherein the total number of points allocated to each factor are maximum 80, and wherein the weighting between the individual factors is such that the maximum budget period estimated will be 20 years

16. A method according to claim 15, wherein the weighting between the various factors is customized to the corporation or business activity concerned

17. A method according to claim 16, wherein allowance is made for the following for purposes of allocating points to the product factor:

- classification of the products by stages in their life cycle,
- classification of the products by their life in general
- classification of the products by business activity/segment

18. A method according to claim 16, wherein allowance is made to the following for purposes of allocating points to the market position factor

- customers,
- suppliers,
- internationalization,
- market conditions,
- profitability

19. A method according to claim 16, wherein allowance is made for the following for purposes of allocating points to the productive equipment factor

- machinery and operating equipment,
- buildings, properties and leases,
- IT,
- environmental/ethical standards

20. A method according to claim 16, wherein allowance is made for the following for purposes of allocating points to the human resource factor

- average age of the staff,
- average seniority,
- the corporation's possibilities of recruiting qualified staff,
- current staff mix by reference to the optimum staff mix,
- further training/education opportunities,
- staff competence level,
- the level of good management in the corporation

21. A method according to any one of claims 14-20, performed by means of a computer program installed on a computer, as the desired data are keyed into the computer, following which the computer program estimates the budget period

22. A method according to claim 21, wherein the computer program applied is a standard spreadsheet program

23. A computer program for purposes of the method according to any one of claims 1-22, which computer program is designed to make the calculations stated

Fig. 1

Fig. 2

## Discounted Share Pricing model

Process                                          Value drivers

Fig. 3

EP 1 233 356 A1

## Discounted Substance Pricing model

Fig. 4

The purpose of the following valuation is to estimate the value of the corporation's stock on the basis of the expected earnings (the "cash flow method") and to give an outline of the pay-back period with regard to the investment - both on the basis of the assumptions detailed below

**NPV of the future cash flow**

| NPV of cash flow year | 1- 5 | 26 989 |
|---|---|---|
| NPV of cash flow year | 6- 7 | 8 220 |
| NPV of cash flow year | 11- | 0 |
| NPV of cash flow year | 16- | 0 |
| NPV of synergies | 50% | 3 872 |
| **Total value** | | **39.081** |

**Equity/goodwill**

| Required equity | 10 000 |
|---|---|
| Goodwill (stand-alone) | 25 208 |
| Goodwill from synergies | 3 872 |
| Cost | **39.081** |

**Future cash flow assumptions:**

The budgeted cash flow on which the above valuation is based is presented in Diagram 3

The discount rate is estimated as shown under "Re 3A"                                    | 12% |

The duration (in years) of the corporation is estimated on the basis of the analysis of duration in Tables 1-5.     | 7 |

The duration (in years) with regard to synergies is set at                               | 4 |

The seller's share of synergies is set at                                                | 50% |

Equity in DKK thousands Reflecting the estimated equity necessary for the future operations    | 10.000 |

In the budget, depreciation/amortization is set to equal the investments assuming that the depreciation/amortization will, in the long term, match the investments required to maintain the existing productive equipment (in DKK'000):    | 1200 |

Growth/rate of inflation                                                                 | 3% |

Tax rate                                                                                 | 32% |

The acquisition is financed 100% through loan financing at an after-tax rate of          | 5,1% |

# Diagram 1

EP 1 233 356 A1

| Future earnings: Year | Realized 1999 | Realized[1] 2000 | Budget[2] 2001 | Budget 2002 | Budget 2003 | Budget 2004 | Budget 2005 | Budget 2006 | Budget 2007 | Budget 2008 | Budget 2009 |
|---|---|---|---|---|---|---|---|---|---|---|---|
| Net sales | 97 638 | 135 307 | 137 707 | 141 838 | 146.093 | 150 476 | 154 990 | 159 640 | 164 429 | 169 362 | 174 443 |
| Cost of sales/cost of production | 73 117 | 106 518 | 109 534 | 112 820 | 116.205 | 119 691 | 123 281 | 126 980 | 130 789 | 134 713 | 138.754 |
| Gross profit | 24.521 | 28.789 | 28.173 | 29.018 | 29.889 | 30.785 | 31.709 | 32.660 | 33.640 | 34.649 | 35.689 |
| Selling expenses | | | 0 | 0 | 0 | 0 | 0 | 0 | 0 | 0 | 0 |
| Administrative expenses | 8 049 | 6 539 | 6 866 | 7 072 | 7 284 | 7 503 | 7 728 | 7 960 | 8 198 | 8 444 | 8.698 |
| Staff costs. etc | 6 694 | 7 732 | 8 119 | 8 363 | 8 613 | 8.872 | 9 138 | 9 412 | 9 695 | 9 985 | 10.285 |
| Income/loss before deprec./amort. | 9.778 | 14.518 | 13.188 | 13.584 | 13.991 | 14.411 | 14.843 | 15.289 | 15.747 | 16.220 | 16.706 |
| Depreciation/amort.=Investments[3] | 850 | 1 178 | 1 200 | 1 200 | 1.200 | 1 200 | 1 200 | 1 200 | 1 200 | 1.200 | 1.200 |
| Income/loss before financing | 8.928 | 13.340 | 11.988 | 12.384 | 12.791 | 13.211 | 13.643 | 14.089 | 14.547 | 15.020 | 15.506 |
| Net financial income/expenses | (1 790) | (1 767) | (1 700) | (1 700) | (1 700) | (1 700) | (1 700) | (1 700) | (1 700) | (1.700) | (1 700) |
| Pre-tax income | 7.138 | 11.573 | 10.288 | 10.684 | 11.091 | 11.511 | 11.943 | 12.389 | 12.847 | 13.320 | 13.806 |
| Tax for the year | | 3 703 | 3 292 | 3 419 | 3 549 | 3.683 | 3 822 | 3 964 | 4.111 | 4.262 | 4.418 |
| Adjusted op. income/loss/cash flow | 7.138 | 7.870 | 6.996 | 7.265 | 7.542 | 7.827 | 8.121 | 8.424 | 8.736 | 9.057 | 9.388 |

## Diagram 2

## Adjustment, resulting from new ownership structure

| | | | | | |
|---|---|---|---|---|---|
| A "Saved expenses" | | | | | |
| -rent/overheads | 0 | 0 | 0 | 0 | 0 |
| -management expenses | 0 | 0 | 0 | 0 | 0 |
| - administrative expenses | 100 | 103 | 106 | 109 | 113 |
| - selling expenses | 0 | 0 | 0 | 0 | 0 |
| Total | 100 | 103 | 106 | 109 | 113 |
| B "Additional expenses" | | | | | |
| -rent/overheads | 0 | 0 | 0 | 0 | 0 |
| -management expenses | 0 | 0 | 0 | 0 | 0 |
| -administrative/selling expenses | 0 | 0 | 0 | 0 | 0 |
| Total | 0 | 0 | 0 | 0 | 0 |
| C Additional earnings from synergies | | | | | |
| - image synergies | 500 | 515 | 530 | 546 | 563 |
| - additional sales | 1 000 | 1 030 | 1 061 | 1 093 | 1 126 |
| - purchase synergies | 2 000 | 2.060 | 2 122 | 2 185 | 2 251 |
| - financing | 0 | 0 | 0 | 0 | 0 |
| Total | 3 500 | 3 605 | 3 713 | 3.825 | 3 939 |
| **Total net adjustment** | **3.600** | **3.708** | **3.819** | **3.934** | **4.052** |
| Estimated tax on net adjustment | 1 152 | 1 187 | 1 222 | 1.259 | 1 297 |
| **Net adjustment after tax** | **2.448** | **2.521** | **2.597** | **2.675** | **2.755** |

[1] Realized figures, latest acc year

[2] Current year budget

# Diagram 3

EP 1 233 356 A1

EP 1 233 356 A1

**Pay-back period:**

| | 2000 | 2001 | 2002 | 2003 | 2004 | 2005 | 2006 | 2007 | 2008 | 2009 |
|---|---|---|---|---|---|---|---|---|---|---|
| Year | 1 | 2 | 3 | 4 | 5 | 6 | 7 | 8 | 9 | 10 |
| Investment, beg. of 2000 | (39.081) | | | | | | | | | |
| Interest on investment after tax, beg. of year | 0 | (1 993) | (1 613) | (1 196) | (740) | (242) | 300 | 745 | 1 228 | 1.753 |
| Cash flow after tax/distribution, beg. of year | | 9 444 | 9 786 | 10 139 | 10 502 | 10 877 | 8 424 | 8 736 | 9.057 | 9.388 |
| Year's net cash flow, beg. of year | (39.081) | 7.451 | 8.173 | 8.943 | 9.762 | 10.634 | 8.724 | 9.481 | 10.286 | 11.141 |
| Year's net cash flow as a % of initial investment | | 0 | 0 | 0 | 0 | 0 | 0 | 0 | 0 | 0 |
| Residual debt on "investment loan" | (39.081) | (31.630) | (23.457) | (14.514) | (4.752) | 5.882 | 14.607 | 24.088 | 34.373 | 45.515 |
| NPV of the year's net cash flow | (39 081) | 6 652 | 6 516 | 6 365 | 6 204 | 6 034 | 4 420 | 4 289 | 4.154 | 4 018 |
| Pay-back of investment at current value | (39.081) | (32.428) | (25.913) | (19.547) | (13.343) | (7.309) | (2.889) | 1.400 | 5.554 | 9.571 |

**Assumptions for the above pay-back period:**

NPV of cash flow calculated on the basis of the above

# Diagram 4

| Table 1. The corporation's products | | |
|---|---|---|
| **a) Classification of products by life stages (the Boston matrix):** | **No** | **Score** |
| Start-up stage (question marks): high growth and low market share | | 0 |
| Growth stage (stars): high growth and high market share | | 0 |
| Ripening stage (cash cows): low growth and high market share | 4 | 8 |
| Ageing stage (dogs): low growth and low market share | | 0 |
| Total | 4 | 8 |

| b) Classification of products by their life in general: (separately entered) | 6 | Yr/points |
|---|---|---|

| c) Classification of products by business activity/segment: | (tick off as appropriate) | | | |
|---|---|---|---|---|
| **Manufacturing business/segment** | **Yes** | **Neutral** | **No** | **Score** |
| Does the corporation develop new products? | x | | | 5 |
| Does the corporation have its own registered trademarks? | | | x | -10 |
| Does the corporation have any patent(s)? | | | x | -10 |
| Are the products brands ? | x | | | 10 |
| Are the products difficult to replace? | | x | | 0 |
| Are the products environmentally sound? | x | | | 5 |
| Has the corporation set up good quality control procedures? | x | | | 5 |
| Total (max 50) | | | | 5 |
| **Commercial trading business/segment** | | | | |
| Does the corporation develop new products? | | | | 0 |
| Does the corporation have its own registered trademarks? | | | | 0 |
| Are the products the producer's trademark? | | | | 0 |
| Are the products brands ? | | | | 0 |
| Has allowance been made for all risks (supplier agreements)? | | | | 0 |
| Has allowance been made for all risks (agency agreements)? | | | | 0 |
| Is there "value added" to the concept (advice. service. etc )? | | | | 0 |
| Total (max 50) | | | | 0 |
| **Service business/segment** | | | | |
| Does the corporation develop new concepts? | | | | 0 |
| Have the concepts been registered? | | | | 0 |
| Have the concepts been patented? | | | | 0 |
| Are the concepts brands? | | | | 0 |
| Is the quality level of the concept/service high? | | | | 0 |
| Does the corpoation provide good guarantees for its services? | | | | 0 |
| Is there "value added" to the concept (advice. service. etc )? | | | | 0 |
| Total (max 50) | | | | 0 |
| Total | | | | 5 |

| Product analysis | | |
|---|---|---|
| Boston matrix | | 8 |
| General life of the products | | 2 |
| Of the above 3 business activities. this corporation has | 1 | 5 |
| Total (max 80 points) | | 15 |

Table 1

| Table 2. The corporation's market position | (tick off as appropriate) | | | |
|---|---|---|---|---|
| a) Customers | Yes | Neutral | No | Score |
| Does the corporation have alarge spread of customers? | x | | | 3.68 |
| Is customer loyalty related to the brand? | x | | | 3.68 |
| Does the corporation offer good customer service? | x | | | 3.68 |
| Does the corporation perform customer satisfaction surveys? | x | | | 3.68 |
| Does the corporation have fieldwork skillls? | x | | | 3.68 |
| Has the corporation adopted a good marketing strategy? | | x | | 0 |
| Does the corporation have a broad customer segment? | x | | | 3.68 |
| Does the corporation apply Customer Relation Management systems? | | | x | -3.68 |
| Does the corporation apply Key Account Management systems? | | | x | -3.68 |
| b) Suppliers | | | | |
| Does the corporation have a reasonable spread of suppliers? | | x | | 0 |
| Has the corporation entered into good supplier agreements? | x | | | 3.68 |
| Is it possible for the corporation to change suppliers quickly? | | x | | 0 |
| Do the suppliers enjoy a good reputation/image/brand? | | x | | 0 |
| Do the suppliers maintain a good ethical standard? | | x | | 0 |
| c) Internationalization | | | | |
| Does the corporation market its produts in other states/countries? | | | x | -3.68 |
| May the products be marketed in other states/countries? | | x | | 0 |
| d) Market conditions | | | | |
| Has the corporation gained any competitive edge? | x | | | 3.68 |
| Are new players barred from entering the market? | | x | | 0 |
| Is the market growing? | | x | | 0 |
| Is the market cyclically neutral? | | | x | -3.68 |
| e) Profitability (by reference to the 3 latest fiscal periods) | | | | |
| Do sales per employee exceed DKK 1.0 million? | x | | | 5 |
| Does the average sales growth exceed the rate of inflation? | | x | | 0 |
| Total (a-e) (max 80 points) | | | | 20 |

# Table 2

| Tabel 3. The corporation's productive equipment | | | | |
|---|---|---|---|---|
| | Yes | Neutral | No | Score |
| **a) Machinery and operating equipment** | | | | |
| Is the productive equipment technologically up-to-date? | | x | | 0 |
| Is the degree of automation high? | | x | | 0 |
| Are investments made on a current basis? | x | | | +4 |
| Is the productive equipment maintained on an ongoing basis? | | x | | 0 |
| Is there any idle productive capacity? | | | x | -4 |
| Is the productive equipment capable of quick change? | x | | | +4 |
| Can the production lead time be increased? | x | | | +4 |
| **b) Buildings/properties/leases** | | | | |
| Is the repair condition of the buildings good? | | | x | -4 |
| Are there any extension possibilities? | x | | | +4 |
| Are there any alternative applications? | | x | | 0 |
| Is the building situated well relative to the infrastructure? | x | | | +4 |
| May the building/lease be vacated without losses? | | x | | 0 |
| **c) IT** | | | | |
| Is IT applied for production management purposes? | x | | | +4 |
| Is IT applied for administrative management purposes? | x | | | +4 |
| Is the corporation's IT system up-to-date? | x | | | +4 |
| Does the corporation use the Internet for marketing purposes? | x | | | +4 |
| **d) Environmental/ethical standards** | | | | |
| Are the products environmentally sound? | x | | | +4 |
| Has the corporation obtained environmental approval? | | x | | 0 |
| Is the corporation's environmental consciousness part of the brand? | | x | | 0 |
| Does the corporation maintain a high ethical standard? | | x | | 0 |
| Total (a-d) (max 80 points) | | | | 32 |

# Table 3

| Table 4. The corporation's human resources | | | | | Low | Average | High |
|---|---|---|---|---|---|---|---|
| a) Average age: < 30 yrs=Low, 30-50 yrs=Average, >50 yrs=High | | | | | | X | |
| b) Average seniority:< 5 yrs=Low, 5-10 yrs=Average, >11 yrs=High | | | | | | X | |
| c) The corporation's possibilities of recruiting qualified staff | | | | | | X | |
| Staff mix by function and related relevant training/education | Optimum staff mix for this corporation | | Current staff mix in this corporation | | | | |
| Administration/finance department | number | | number | Comments | | | |
| Office assistants and technical assistants | 2 | | 2 | | | | |
| Bookkeepers and other accounting staff | 2 | | 2 | | | | |
| Secretaries | | | | | | | |
| Finance directors and controllers | 1 | | 1 | | | | |
| Personnel staff | | | | | | | |
| HR manager | 1 | | | | | | |
| IT manager | | | | | | | |
| Top executives | 1 | | 1 | | | | |
| Production department | | | | | | | |
| Unskilled workers, delivery men and others | | | | | | | |
| Skilled artisans and other skilled workers | 60 | | 60 | | | | |
| Servicepeople and fitters | 3 | | 2 | | | | |
| Works managers/foremen | 7 | | 6 | | | | |
| Engineers and technicians | 1 | | | | | | |
| Production manager | 1 | | 1 | | | | |
| Product development and research staff | | | | | | | |
| Sales and purchasing department | | | | | | | |
| Salespeople | 2 | | 1 | | | | |
| Sales manager | 1 | | 1 | | | | |
| Purchasers | | | | | | | |
| Purchase manager | 1 | | | | | | |
| Marketing manager | 1 | | | | | | |
| Product and market development staff | | | | | | | |
| Score | 84 | 92% | 77 | | | | |
| d) Staff mix by reference to the optimum staff mix | | | | | | | X |
| Further training/eduation | Optimum staff mix for this corporation | | Current staff mix in the corporation | | | | |
| In-house courses for the staff | 1 | | | Comments | | | |
| External courses for the staff | 1 | | | | | | |
| Influence on own training process | 1 | | | | | | |
| Availability of career planning activities for the staff | 1 | | | | | | |
| In-house training of own future executives | 1 | | | | | | |
| On-the-job training | 1 | | 1 | | | | |
| Score | 6 | 17% | 1 | | | | |
| e) Availability of further training/education - internally and externally? | | | | | | X | |
| Staff competence level | Optimum skills for this corporation | | Current skills of the staff | | | | |
| Good technical skills | 1 | | 1 | Comments | | | |
| Good sales proficiencies | 1 | | 1 | | | | |
| Good IT proficiencies | 1 | | | | | | |
| Customer service abilities | 1 | | 1 | | | | |
| Ability to work across the organization | 1 | | 1 | | | | |
| Ability to work in teams | 1 | | 1 | | | | |
| Score | 6 | 83% | 5 | | | | |
| f) The staff competence level is? | | | | | | | X |
| Management | Competent management is characterized by | | This corporation is characterized by | | | | |
| "Visible" and performance-oriented managers | 1 | | 1 | Comments | | | |
| Management's staff motivation skills | 1 | | 1 | | | | |
| Inclusion of selected staff in the management team | 1 | | 1 | | | | |
| Creation of corporate image/spirit | 1 | | | | | | |
| Score | 4 | 75% | 3 | | | | |
| g) The level of "competent" management in the enterprise is? | | | | | | | X |
| Total: | | | | | 1 | 22,86 | 34,29 |
| Total human resources (max 80 points) | | | | | | 58 | Points |

## Table 4

| Table 5: Estimation of duration as a weighted average of the 4 elements | | | |
|---|---|---|---|
| Total duration | Weight | Points | Duration |
| 1. The corporation's products | 30% | 15,00 | 4,50 |
| 2. The corporation's market position | 30% | 19,72 | 5,92 |
| 3. The corporation's productive equipment | 15% | 32,00 | 4,80 |
| 4. The corporation's human resources | 25% | 58,15 | 14,54 |
| Total (weighted average) | 100% | | 7,44 |

# Table 5

## Form A) Value of the activity:

### Net present value (NPV) of the cash flow = Goodwill

| | | | |
|---|---|---|---|
| NPV of cash flow in year | 1- | 5 | 25 437 |
| NPV of cash flow in year | 6- | 7 | 6 752 |
| NPV of cash flow in year | 11- | | 0 |
| NPV of cash flow in year | 16- | | 0 |
| **Goodwill at January 1, 2001** | | | **32.189** |

### Value of the activity:

| | |
|---|---|
| **Value of the assets** | **62.000** |
| **Goodwill** | **32.189** |
| **Total value of the activity** | **94.189** |

**Form A** illustrates the total value of the business activity. This model is based on a number of assumptions, which are reflected in Forms B and C

**Form B** illustrates the depreciation/amortization resulting from the acquisition of the activity as well as the financing cost resulting from the acquisition of assets and goodwill. Depreciation/amortization is classified by type due to differences as to periods and rates. Rates and periods vary and are based on normal depreciation for operating purposes 2-5% for properties/buildings and 20-30% for machinery. Amortization of goodwill follows the duration of the budget period for both operating and tax purposes. Depreciation for tax purposes is illustrated next to the depreciation for operating purposes to show the difference between the depreciation for operating and tax purposes and to be able to make ajustments, if necessary, in Form F

**Form C** shows the value drivers comprised by the model. The most important value drivers are the duration, the growth and - not least - the discount rate. It is very important to estimate these value drivers due to their considerable impact on the value

**Form D** illustrates the expected operating budget, prepared on the basis of the budget assumptions and a thorough analysis of the activity and the estimated assumptions in Form C.

**Form E** illustrates the "saved expenses", the "additional expenses" and the excess earnings expected to result from the acquisition of the activity. As this amount will be split by the seller and the purchaser as per agreement in the first years following the transaction, the synergies cannot be included for more than 5 years. The split is reflected in Form C

**Form F** illustrates the cash flow which is a result of the sum of Forms D and E and the amortization of goodwill, due to the fact that the amortization does not affect the liquidity of the corporation. Any major differences between the depreciation of property for tax and operating purposes may be adjusted in Form F. Finally, the time value of the discount rate is illustrated as well as the time value of the cash flow

**Form G** illustrates the investor's pay-back period on the assumption that the entire investment is financed through loan capital and that the cash flow is used to pay back the debt. The pay-back concerns goodwill only

## Form A

EP 1 233 356 A1

**Form B) Depreciation/amortization assumptions:**

| Analysis of cost: | Value | Rate | Amount | Depreciation/amortization for operating purposes and financing cost: | | Rate | Amounts in DKK'000 |
|---|---|---|---|---|---|---|---|
| | DKK'000 | | | | | | |
| 1 Properties/buildings | 10 000 | 2% | 200 | | | 5% | 500 |
| 2 Land (*) | 1 000 | - | - | | | 0% | - |
| 3 Machinery and operating equipment (**) | 6 000 | 20% | 1 200 | | | 30% | 1 800 |
| Total value of assets | 17 000 | 7,5% | 1275 | = financing cost | | | |
| Current assets (inventories, etc ) | 45 000 | 7,5% | 3 375,0 | = financing cost | | | |
| **4. Goodwill(***)** | **32.189** | **14,29%** | **4.598** | | | | |
| Financing of goodwill | 32 189 | 7,5% | 2 414 | = financing cost | | 14.29% | 4 600 |

(*) Land is not depreciated

(**) Machinery and operating equipment is valued/traded at the current market value and depreciated over their expected residual life

(***) Goodwill is estimated via interpolation once all other data are known

The depreciation of properties, machinery and operating equipment is assumed, in the long term, to match the investments needed to maintain the assets

## Form B

**Form C) General assumptions:**

| | | |
|---|---|---|
| Estimated duration in years (variable) | 7 | The duration is varible between 1-20 years Amortization of goodwill must match the duration |
| Growth/inflation | 3% | Estimated growth rate, the rate used to extrapolate the operating budget and synergies |
| Tax | 0% | Is set at 0% as goodwill is fully deductible for tax purposes for the purchaser, the seller pays tax on goodwill sold |
| Discount rate | 12% | The after-tax rate used to estimate the NPV of the cash flow<br>The discount rate reflects the investor's expected, required after-tax yield on the investment |
| Seller's share of synergies | 50% | Duration with regard to synergies  4 years |
| Interest rate after tax | 5,1% | Used in Form G to illustrate the pay-back period |

## Form C

**Form D) Operating budget:**

| Year | 2001 Budget | 2002 Budget | 2003 Budget | 2004 Budget | 2005 Budget | 2006 Budget | 2007 Budget | 2008 Budget | 2009 Budget | 2010 Budget |
|---|---|---|---|---|---|---|---|---|---|---|
| Net sales | 137 707 | 141 838 | 146 093 | 150 476 | 154 990 | 159 640 | 164 429 | 169.362 | 174 443 | 179.676 |
| Cost of sales | 109 534 | 112 820 | 116 205 | 119 691 | 123 281 | 126 980 | 130 789 | 134.713 | 138 754 | 142.917 |
| **Gross profit** | **28.173** | **29.018** | **29.889** | **30.785** | **31.709** | **32.660** | **33.640** | **34.649** | **35.689** | **36.759** |
| Overheads | 14 985 | 15 435 | 15 898 | 16 375 | 16.866 | 17 372 | 17 893 | 18.430 | 18 983 | 19.552 |
| **Income/(loss) before deprec./amort.** | **13.188** | **13.584** | **13.991** | **14.411** | **14.843** | **15.289** | **15.747** | **16.220** | **16.706** | **17.207** |
| Depreciation of properties | 200 | 200 | 200 | 200 | 200 | 200 | 200 | 200 | 200 | 200 |
| Depreciation of machinery/op equipment | 1 200 | 1 200 | 1 200 | 1.200 | 1 200 | 1 200 | 1 200 | 1 200 | 1 200 | 1.200 |
| Amortization of goodwill | 4 598 | 4 598 | 4 598 | 4 598 | 4 598 | 4 598 | 4 598 | 0 | 0 | 0 |
| **Income/(loss) before financing inc./exp.** | **7.190** | **7.585** | **7.993** | **8.412** | **8.845** | **9.290** | **9.749** | **14.820** | **15.306** | **15.807** |
| Financing cost. current operations | 3 375 | 3 375 | 3 375 | 3 375 | 3 375 | 3 375 | 3 375 | 3 375 | 3 375 | 3.375 |
| Financing cost. fixed assets | 1 275 | 1 275 | 1 275 | 1 275 | 1 275 | 1 275 | 1 275 | 1 275 | 1.275 | 1 275 |
| Financing cost. goodwill | 2 414 | 2 414 | 2 414 | 2 414 | 2 414 | 2 414 | 2 414 | | | |
| **Pre-tax income/(loss)** | **125** | **521** | **929** | **1.348** | **1.781** | **2.226** | **2.685** | **10.170** | **10.656** | **11.157** |
| Tax adjustments | - | - | - | - | - | - | - | - | - | - |
| Tax for the year | - | - | - | - | - | - | - | - | - | - |
| **Operating income/(loss)** | **125** | **521** | **929** | **1.348** | **1.781** | **2.226** | **2.685** | **10.170** | **10.656** | **11.157** |

# Form D

EP 1 233 356 A1

| Form E) Synergies: | | | | | |
|---|---|---|---|---|---|
| **Year** | 2001 | 2002 | 2003 | 2004 | 2005 |
| A "Saved expenses". | | | | | |
| -rent/overheads | 120 | 124 | 127 | 131 | 135 |
| -management expenses | 0 | 0 | 0 | 0 | 0 |
| - administrative expenses | 100 | 103 | 106 | 109 | 113 |
| - selling expenses | 0 | 0 | 0 | 0 | 0 |
| Total | 220 | 227 | 233 | 240 | 248 |
| B "Additional expenses" | | | | | |
| -rent/overheads | 50 | 52 | 53 | 55 | 56 |
| -management expenses | 0 | 0 | 0 | 0 | 0 |
| -administrative/selling expenses | 0 | 0 | 0 | 0 | 0 |
| Total | 50 | 52 | 53 | 55 | 56 |
| C Additional earnings from synergies | | | | | |
| - image synergies | 500 | 515 | 530 | 546 | 563 |
| - additional sales | 1 000 | 1 030 | 1 061 | 1 093 | 1 126 |
| - purchase synergies | 2 000 | 2 060 | 2 122 | 2 185 | 2 251 |
| - financing | 0 | 0 | 0 | 0 | 0 |
| Total | 3 500 | 3 605 | 3 713 | 3 825 | 3 939 |
| **Total net adjustments:** | **3.670** | **3.780** | **3.894** | **4.010** | **4.131** |
| Tax | 0 | 0 | 0 | 0 | 0 |
| **Net adjustments after tax:** | **3.670** | **3.780** | **3.894** | **4.010** | **4.131** |

# Form E

EP 1 233 356 A1

## Form F) Cash flow from operations, synergies, goodwill and depreciation, if any, of properties:

| Year | 2000 | 2001 | 2002 | 2003 | 2004 | 2005 | 2006 | 2007 | 2008 | 2009 |
|---|---|---|---|---|---|---|---|---|---|---|
| | Budget | Budget | Budget | Budget | Budget | Budget | Budget | Budget | Budget | Budget |
| Operating profit | 125 | 521 | 929 | 1 348 | 1 781 | 2 226 | 2 685 | 10 170 | 10 656 | 11 157 |
| Seller's share of synergies | 1 835 | 1 890 | 1 947 | 2 005 | 0 | - | - | - | - | - |
| Amortization of goodwill | 4 598 | 4 598 | 4 598 | 4 598 | 4 598 | 4 598 | 4 598 | - | - | - |
| Adjustments of depreciation of properties | | | | | | | | | | |
| Cash flow | 6.559 | 7.010 | 7.474 | 7.952 | 6.379 | 6.824 | 7.283 | 10.170 | 10.656 | 11.157 |
| Discount rate (time value) | 0.8929 | 0.7972 | 0.7118 | 0.6355 | 0 5674 | 0.5066 | 0 4523 | 0.4039 | 0.3606 | 0.3220 |
| NPV of cash flow | 5.856 | 5.588 | 5.320 | 5.054 | 3.620 | 3.457 | 3.294 | 4.107 | 3.843 | 3.592 |

## Form F

38

## Form G) Investor's cash flow/yield/pay-back period:

| | Year | 2000 | 2001 | 2002 | 2003 | 2004 | 2005 | 2006 | 2007 | 2008 | 2009 |
|---|---|---|---|---|---|---|---|---|---|---|---|
| | | 1 | 2 | 3 | 4 | 5 | 6 | 7 | 8 | 9 | 10 |
| Investment in goodwill | | (32189) | | | | | | | | | |
| Interest on the investment after tax | | 0 | (1642) | (937) | (171) | 661 | 1563 | 2329 | 3156 | 4048 | 5010 |
| Pre-tax cash flow | | | 15458 | 15964 | 16485 | 17021 | 13443 | 13889 | 14347 | 14820 | 15306 |
| Net cash flow at beginning of year | | (32189) | 13816 | 15027 | 16314 | 17683 | 15006 | 16217 | 17503 | 18868 | 20317 |
| Net cash flow as a % of initial investment | | | 0 | 0 | 1 | 1 | 0 | 1 | 1 | 1 | 1 |
| Residual debt | | (32189) | (18372) | (3346) | 12968 | 30651 | 45657 | 61874 | 79377 | 98245 | 118562 |
| NPV of the net cash flow | | (32189) | 12336 | 11979 | 11612 | 11238 | 8515 | 8216 | 7917 | 7620 | 7326 |
| Pay-back of the investment in NPV | | (32189) | (19853) | (7873) | 3739 | 47165 | 43344 | 39581 | 35886 | 32269 | 31080 |

## Form G

**European Patent Office**

**DECLARATION**

Application Number

which under Rule 45 of the European Patent Convention EP 01 61 0010
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims<br><br>Reason: | CLASSIFICATION OF THE APPLICATION (Int.Cl.7)<br><br>G06F17/60 |
| --- | --- |

The subject matter as claimed relates to a
scheme, rule or method for doing business
and falls under Art. 52(2c) EPC for which
a search is not required. Furthermore, the
subject matter as claimed specifies only
items or commonplace features of their
technological implemention. The search
examiner could not establish any technical
problem which might potentially have
required an inventive step to overcome. A
meaningful search is therefore not
possible (Rule 45 EPC). -

The applicant's attention is drawn to the
fact that a search may be carried out
during examination following a declaration
of no search under Rule 45 EPC, should the
problems which led to the declaration
being issued be overcome (see EPC
Guideline C-VI, 8.5).

| Place of search | Date | Examiner |
| --- | --- | --- |
| MUNICH | 21 May 2001 | Glaser, N |

EPO FORM 1504 (P04C37)